(19)

**Europäisches Patentamt**
**European Patent Office**
**Office européen des brevets**

(11)  **EP 4 779 522 A1**

(12)  **EUROPEAN PATENT APPLICATION**

(43) Date of publication:
**22.07.2026   Bulletin 2026/30**

(21) Application number: **25223746.6**

(22) Date of filing: **16.12.2025**

(51) International Patent Classification (IPC):
**G06N 3/0455** *(2023.01)*   **G06N 3/088** *(2023.01)*
**G06N 3/044** *(2023.01)*   **G06N 3/0464** *(2023.01)*
**G06N 20/10** *(2019.01)*

(52) Cooperative Patent Classification (CPC):
**G06N 3/0455; G06N 3/088;** G05B 23/024;
G06N 3/044; G06N 3/0464; G06N 20/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **16.01.2025   GB 202500578**

(71) Applicant: **Rolls-Royce plc**
**London N1 9FX (GB)**

(72) Inventors:
• **Ameri, Nima**
**Derby, DE24 8BJ (GB)**

• **Naylor, Philip**
**Derby, DE24 8BJ (GB)**
• **Mills, Andrew**
**Derby, DE24 8BJ (GB)**
• **Jacobs, William**
**Derby, DE24 8BJ (GB)**
• **Montana-Gonzalez, Felipe**
**Derby, DE24 8BJ (GB)**
• **Kadirkamanathan, Visakan**
**Derby, DE24 8BJ (GB)**

(74) Representative: **Rolls-Royce plc**
**P.O. Box 31**
**IP Department (SinA-48)**
**Derby Derbyshire DE24 8BJ (GB)**

(54)  **TRAINING AN ENCODER MODEL**

(57)    There is provided a method of training an encoder model to map inputs representing nominally healthy assets to a cluster of data points. The method comprises providing an input representing a behaviour of an asset at a first point in time to the encoder model undergoing training to map the input to a data point in the feature space, wherein the encoder model is intended to cause data points relating to measured values of input parameters acquired from the same asset at similar time to cluster in feature space, providing the data point to a decoder model, to determine a reconstructed input, determining a difference between the input, and the reconstructed input, and training the encoder model based on the determined difference to map inputs representing nominally healthy assets acquired at similar times to a cluster of data points.

*800*

PROVIDE AN INPUT REPRESENTING A BEHAVIOUR OF AN ASSET AT A FIRST POINT IN TIME TO THE ENCODER MODEL UNDERGOING TRAINING TO MAP THE INPUT TO A DATA POINT IN THE FEATURE SPACE, WHEREIN THE ENCODER MODEL IS INTENDED TO CAUSE DATA POINTS RELATING TO MEASURED VALUES OF INPUT PARAMETERS ACQUIRED FROM THE SAME ASSET AT SIMILAR TIME TO CLUSTER IN FEATURE SPACE
*802*

PROVIDE THE DATA POINT TO A DECODER MODEL, TO DETERMINE A RECONSTRUCTED INPUT
*804*

DETERMINE A DIFFERENCE BETWEEN THE INPUT, AND THE RECONSTRUCTED INPUT
*806*

TRAIN THE ENCODER MODEL BASED ON THE DETERMINED DIFFERENCE TO MAP INPUTS REPRESENTING NOMINALLY HEALTHY ASSETS ACQUIRED AT SIMILAR TIMES TO A CLUSTER OF DATA POINTS
*808*

*FIG. 8*

EP 4 779 522 A1

**Description**

TECHNOLOGICAL FIELD

Embodiments described herein relate to methods and apparatuses for training an encoder model to map inputs representing nominally healthy assets to a cluster of data points.

BACKGROUND

Equipment health monitoring is central to the operation of many industries. Correct identification of emerging faults contributes to a reduction in operating and maintenance costs. A particular challenge is the detection of previously unseen fault and degradation modes which can often present as divergence from normal behaviour.

Recent developments in deep anomaly detection methods have demonstrated the capacity of deep neural networks to learn feature embeddings for complex, high dimensional data, that are well suited for the identification of anomalous data samples. Such methods have primarily been developed and tested for image data, and are successful for large, static and labelled datasets.

However, data recorded from equipment, generally referred to herein as 'assets', and in particular mechanical assets such as engines or turbines, is dynamic and affected by multiple sources of variation. Taking an example of an engine, this variation can be a result of one or more of: a non-static engine condition (caused by the age of the engine, for example), operating conditions (for example, a route that is being taken by the engine, environmental conditions or the like), engine maintenance events, and variability in the time that the data is obtained (for example, different periods in a operational cycle that the engine is taking). Anomalous behaviours may be masked by the above variability.

Deep anomaly detection methods can be directly applied to datasets of evolving data that is affected by multiple sources of variation, as is the case for engines. In such cases, apparent anomalies can be dominated by variation in the operation of the assets and/or general aging which is within anticipated parameters, rather than in their health.

Alternatively, a data-driven diagnostic network may be used to detect anomalous behaviour in assets. When using a diagnostic network, no knowledge about the anomalies is required. However, as the volume and variability of the data increases, these "catch-all" methods may return a large number of false positives.

Some existing data-driven diagnostic networks would benefit from pipelines to systematically remove the effects of different noise and disturbances, in order to reduce reliance on ad hoc approaches. This may enhance the ability to extract incipient symptoms in a timely manner, thus resulting in lower operating costs and/or increased revenue.

BRIEF SUMMARY

According to a first aspect of the present disclosure, there is provided a method of training an encoder model to map inputs representing nominally healthy assets to a cluster of data points. The method comprises providing an input representing a behaviour of an asset at a first point in time to the encoder model undergoing training to map the input to a data point in the feature space, wherein the encoder model is intended to cause data points relating to measured values of input parameters acquired from the same asset at similar time to cluster in feature space. The method further comprises providing the data point to a decoder model, to determine a reconstructed input. The method further comprises, determining a difference between the input, and the reconstructed input. The method further comprises training the encoder model based on the determined difference to map inputs representing nominally healthy assets acquired at similar times to a cluster of data points. The behaviour of the asset may be a physical response of the asset to a particular control input, and may be observed via data collected from sensors, for example, speed, temperature, fluid flow, fill level, etc.

In some examples, the input may comprise a residual representing a behaviour deviation from a nominally healthy asset.

In some examples, training the encoder model may comprise updating values of trainable parameters of the encoder model to minimize a value of a loss function, wherein the loss function comprises at least one of: a first loss function component which is configured to cause data points relating to measured values of input parameters acquired from the same asset at similar times to cluster in feature space; a second loss function component which is configured to penalise dissimilarity between the input and the reconstructed input; and a third loss function component which is configured to cause data points representing nominally healthy assets to cluster in feature space.

In some examples, the first loss function component may be weighted so as to cause data points relating to measured values of input parameters acquired from the same asset that are closer in time to be clustered closer in feature space.

In some examples, the second loss function component may be of the form:

$$ L_2 = \frac{1}{n} \sum_{i=1}^{n} \left\| \Delta_i - \widehat{\Delta}_i \right\|^2 $$

wherein n is the total number of inputs, $\Delta_i$ where i = 1, ..., n is the i$^{th}$ input, and $\widehat{\Delta}_i$ is the i$^{th}$ reconstructed input.

In some examples, the third loss function component may be of the form:

$$L_3 = \frac{1}{n}\sum_{i=1}^{n}\left||z_i - c|\right|^2$$

wherein n is the total number of data points, $z_i$ where i = 1, ..., n is the $i^{th}$ data point in the feature space, a c is a centroid of the cluster of data points representing nominally healthy assets.

In some examples, the first loss function component may be of the form:

$$L_1 = \frac{1}{n}\sum_{i=1}^{n}\sum_{k=1}^{n}\lambda_{ik}\left||z_i - z_k|\right|^2$$

wherein n is the total number of data points, $z_i$ where i = 1, ..., n is the $i^{th}$ data point in the feature space, $z_k$ where k = 1, ..., n is the $k^{th}$ data point in the feature space, and $\lambda_{ik}$ is a parameter that causes data points relating to measured values of input parameters acquired from the same asset that are closer in time to be clustered closer in feature space. In some examples, $\lambda_{ik} = e^{-\gamma \Delta t^2}$ if the data points $z_i$ and $z_k$ represent the same asset; and $\lambda_{ik} = 0$ otherwise.

In some examples, the method may further comprise using the trained encoder model in a method of monitoring the health of an asset.

According to a second aspect of the present disclosure, there is provided training device for training an encoder model to map residuals inputs representing nominally healthy assets to a cluster of data points, the training device comprising processing circuitry configured to perform a method according to the first aspect of the present disclosure.

In some examples, the input may comprise a residual representing a behaviour deviation from a nominally healthy asset.

In some examples, the processing circuitry may be configured to train the encoder model by updating values of trainable parameters of the encoder model to minimize a value of a loss function, wherein the loss function comprises at least one of: a first loss function component which is configured to cause data points relating to measured values of input parameters acquired from the same asset at similar time to cluster in feature space; a second loss function component which is configured to penalise dissimilarity between the input and the reconstructed input; and a third loss function component which is configured to cause data points representing nominally healthy assets to cluster in feature space.

In some examples, the first loss function component may be weighted so as to cause data points relating to measured values of input parameters acquired from the same asset that are closer in time to be clustered closer in feature space.

In some examples, the second loss function component may be of the form:

$$L_2 = \frac{1}{n}\sum_{i=1}^{n}\left||\Delta_i - \widehat{\Delta}_i|\right|^2$$

wherein n is the total number of inputs, $\Delta_i$ where i = 1, ..., n is the $i^{th}$ input, and $\hat{\Delta}_i$ is the $i^{th}$ reconstructed input.

In some examples, wherein the third loss function component may be of the form:

$$L_3 = \frac{1}{n}\sum_{i=1}^{n}\left||z_i - c|\right|^2$$

wherein n is the total number of data points, $z_i$ where i = 1, ..., n is the $i^{th}$ data point in the feature space, a c is a centroid of the cluster of data points representing nominally healthy assets.

In some examples, the first loss function component may be of the form:

$$L_1 = \frac{1}{n}\sum_{i=1}^{n}\sum_{k=1}^{n}\lambda_{ik}\left||z_i - z_k|\right|^2$$

wherein n is the total number of data points, $z_i$ where i = 1, ..., n is the $i^{th}$ data point in the feature space, $z_k$ where k = 1, ..., n is the $k^{th}$ data point in the feature space, and $\lambda_{ik}$ is a parameter that causes data points relating to measured values of input parameters acquired from the same asset that are closer in time to be clustered closer in feature space. In some examples, $\lambda_{ik} = e^{-\gamma \Delta t^2}$ if the data points $z_i$ and $z_k$ represent the same asset; and $\lambda_{ik} = 0$ otherwise.

In some examples, the processing circuitry may be further configured to: use the trained encoder model in a method of monitoring the health of an asset.

According to a third aspect of the present disclosure, there is provided a machine readable medium storing instructions which, when executed by a processor, cause the processor to carry out a method according to the first aspect of the present disclosure.

According to a fourth aspect of the present disclosure, there is provided a computer program comprising instructions which, when executed by processing circuitry of a training device, cause the training device to perform the method according to the first aspect of the present disclosure.

According to a fifth aspect of the present disclosure, there is provided a method of monitoring the health of an asset. The method comprises obtaining a measured value of an input parameter representing an operational state of the asset. The method further comprises determining, based on the value, a residual that represents the behaviour of the asset. The method further comprises providing the determined residual to an encoder model to map the determined residual to a data point in a feature space. The method further comprises determining a distance of the data point relative to a cluster of data points in the feature space, wherein the cluster of data points are determined by the encoder based on residuals representing nominally healthy assets. The method further comprises, in response to the determined distance exceeding a predetermined distance threshold, generating an abnormal asset behaviour prediction. The behaviour of the asset may be a physical response of the asset to a particular control input, and may be observed via data collected from sensors, for example, speed, temperature, fluid flow, fill level, etc.

In some examples, determining, based on the value, a residual that represents the behaviour of the asset, may comprise providing the value as an input to a trained machine learning model, to obtain, from the trained machine learning model, a respective predicted value of an output parameter that represents the behaviour of a representative asset of a group of assets, determining the residual as the difference between the predicted value of the output parameter and a measured value of the output parameter for the asset.

In some examples, the machine learning model may be trained using a training data set comprising, for each asset of the group of assets, historical values of the input parameter and historical values of the output parameter.

In some examples, the training data set may comprise, for each asset of the group of assets, average historical values of the input parameter over a second time period, and average historical values of the output parameter over the second time period.

In some examples, the predetermined distance threshold may denote a boundary in the feature space between normal deviations in behaviour of the asset and abnormal deviations in behaviour of the asset.

In some examples, the predetermined distance threshold may denote a boundary in the feature space between normal deviations in behaviour of the asset over a first time period, and abnormal deviations in behaviour of the asset over the first time period.

In some examples, determining the distance may comprise determining a distance of the data point relative to a centroid of the cluster of data points.

In some examples, the method may further comprise, in response to the abnormal asset behaviour prediction, performing one or more actions on the asset.

In some examples, the one or more actions may comprise one or more of: scheduling maintenance of the asset, altering the operation of the asset, and altering the control of the asset.

In some examples, the cluster of data points may be determined by the encoder based on residuals representing nominally healthy assets over a first time period.

In some examples, wherein the asset is at least part of an engine, the input parameter may comprise any of: an altitude at which the engine is/was operating, a temperature of the environment in which the engine is/was operating, a pressure in the environment in which the engine is/was operating, a flow rate of a fluid within the engine, a speed of the engine, a voltage in the engine, a fuel flow demand of the engine, a build configuration of the engine, a weather condition in the environment in which the engine is/was operating, a temperature of the engine, a power setting parameter of the engine, and a control system setting of the engine.

In some examples, wherein the asset is at least part of an engine, the output parameter may comprise any of: a temperature of the engine, a speed of the engine, a voltage in the engine.

In some examples, the measured value of the input parameter and/or the measured value of the output parameter may be obtained from one or more sensors on the asset.

In some examples, the asset may be any of: an engine, a part of an engine, a subsystem of an engine.

In some examples, wherein the engine may be a gas turbine engine.

In some examples, the assets may be of the same type.

According to a sixth aspect of the present disclosure, there is provided a monitoring device for monitoring the health of an asset, the monitoring device comprising processing circuitry configured to perform a method according to the fifth aspect of the present disclosure.

In some examples, the processing circuitry may be configured to determine, based on the value, a residual that represents the behaviour of the asset by: providing the value as an input to a trained machine learning model, to obtain, from the trained machine learning model, a respective predicted value of an output parameter that represents the behaviour of a representative asset of a group of assets; determining the residual as the difference between the predicted value of the output parameter and a measured value of the output parameter for the asset.

In some examples, the machine learning model may be trained using a training data set comprising, for each asset of the group of assets, historical values of the input parameter and historical values of the output parameter.

In some examples, the training data set may comprise, for each asset of the group of assets, average historical values of the input parameter over a second time period, and average historical values of the output parameter over the second time period.

In some examples, the predetermined distance threshold may denote a boundary in the feature space between normal deviations in behaviour of the asset and abnormal deviations in behaviour of the asset.

In some examples, the predetermined distance threshold may denote a boundary in the feature space between normal deviations in behaviour of the asset over a first time period, and abnormal deviations in behaviour of the asset over the first time period.

In some examples, the processing circuitry may be configured to determine the distance by determining a distance of the data point relative to a centroid of the cluster of data points.

In some examples, the processing circuitry may be further configured to: in response to the abnormal asset behaviour prediction, perform one or more actions on the asset.

In some examples, the one or more actions may comprise one or more of: scheduling maintenance of the asset; altering the operation of the asset; and altering the control of the asset.

In some examples, the cluster of data points may be determined by the encoder based on residuals representing nominally healthy assets over a first time period.

In some examples, wherein the asset is at least part of an engine, the input parameter may comprise any of: an altitude at which the engine is/was operating, a temperature of the environment in which the engine is/was operating, a pressure in the environment in which the engine is/was operating, a flow rate of a fluid within the engine, a speed of the engine, a voltage in the engine, a fuel flow demand of the engine, a build configuration of the engine, a weather condition in the environment in which the engine is/was operating, a temperature of the engine, a power setting parameter of the engine, and a control system setting of the engine.

In some examples, wherein the asset is at least part of an engine, the output parameter may comprise any of: a temperature of the engine, a speed of the engine, a voltage in the engine.

In some examples, the measured value of the input parameter and/or the measured value of the output parameter may be obtained from one or more sensors on the asset.

In some examples, the asset may be any of: an engine, a part of an engine, a subsystem of an engine.

In some examples, the engine may be a gas turbine engine.

In some examples, the assets are of the same type.

According to a seventh aspect of the present disclosure, there is provided a machine readable medium storing instructions which, when executed by a processor, cause the processor to carry out a method according to the fifth aspect of the present disclosure.

According to an eighth aspect of the present disclosure, there is provided a computer program comprising instructions which, when executed by processing circuitry of a monitoring device, cause the monitoring device to perform the method according to the fifth aspect of the present disclosure.

According to a ninth aspect of the present disclosure, there is provided a method of monitoring the health of an asset. The method comprises providing an input representing the behaviour of the asset to an encoder model to map the input to a data point in a feature space, wherein the encoder model is configured to cause data points relating to measured values of input parameters acquired from the asset at a similar time to cluster in feature space. The method further comprises determining a distance of the data point relative to a cluster of data points in feature space, where the cluster of data points are determined by the encoder based on inputs representing the asset over a first time period. The method further comprises, in response to the determined distance exceeding a predetermined distance threshold, generating an abnormal asset behaviour prediction. The behaviour of the asset may be a physical response of the asset to a particular control input, and may be observed via data collected from sensors, for example, speed, temperature, fluid flow, fill level, etc.

In some examples, the input may comprise a measured value of an input parameter representing an operational state of the asset at a first point in time.

In some examples, the input may comprise a determined residual. In these examples, determining the residual may comprise: obtaining a measured value of an input parameter representing an operational state of the asset at a first point in time; providing the value as an input to a trained machine learning model, to obtain, from the trained machine learning model, a respective predicted value of an output parameter that represents the behaviour of a representative asset of a group of assets at the first point in time; determining the residual as a difference between the predicted value of the output parameter and a measured value of the output parameter for the asset at the first point in time.

In some examples, the machine learning model may be trained using a training data set comprising, for each asset of the group of assets, historical values of the input parameter and historical values of the output parameter.

In some examples, the training data set may comprise, for each asset of the group of assets, average historical values of the input parameter over a second time period, and average historical values of the output parameter over the second time period.

In some examples, the predetermined distance threshold may denote a boundary in the feature space between normal deviations in behaviour of the asset and abnormal deviations in behaviour of the asset.

In some examples, the predetermined distance threshold may denote a boundary in the feature space between normal deviations in behaviour of the asset over a first time period, and abnormal deviations in behaviour of the asset over the first time period.

In some examples, determining the distance may comprise determining a distance of the data point relative to a centroid of the cluster of data points.

In some examples, the method may further comprise, in response to the abnormal asset behaviour prediction, performing one or more actions on the asset.

In some examples, the one or more actions may comprise one or more of: scheduling maintenance of the asset; altering the operation of the asset; and altering the control of the asset.

In some examples, the input parameter may comprise any of: an altitude at which the engine is/was operating, a temperature of the environment in which the engine is/was operating, a pressure in the environment in which the engine is/was operating, and a flow rate of a fluid within the engine, a speed of the engine, a voltage in the engine, a fuel flow demand of the engine, a build configuration of the engine, a weather condition in the environment in which the engine is/was operating, a temperature of the engine, a power setting parameter of the engine, and a control system setting of the engine.

In some examples, wherein the asset is at least part of an engine, the output parameter may comprise any of: a temperature of the engine, a speed of the engine, a voltage in the engine.

In some examples, the measured value of the input parameter and/or the measured value of the output parameter may be obtained from one or more sensors on the engine.

In some examples, the asset may be any of: an engine, a part of an engine, a subsystem of an engine.

In some examples, the engine may be a gas turbine engine.

In some examples, the assets may be of the same type.

According to a tenth aspect of the present disclosure, there is provided a monitoring device for monitoring the health of an asset, the monitoring device comprising processing circuitry configured to perform a method according to the ninth aspect of the present disclosure.

In some examples, the input may comprise a measured value of an input parameter representing an operational state of the asset at a first point in time.

In some examples, the input may comprise a determined residual. In these examples, the processing circuitry may be configured to determine the residual by: obtaining a measured value of an input parameter representing an operational state of the asset at a first point in time; providing the value as an input to a trained machine learning model, to obtain, from the trained machine learning model, a respective predicted value of an output parameter that represents the behaviour of a representative asset of a group of assets at the first point in time; and determining the residual as a difference between the predicted value of the output parameter and a measured value of the output parameter for the asset at the first point in time.

In some examples, the machine learning model may be trained using a training data set comprising, for each asset of the group of assets, historical values of the input parameter and historical values of the output parameter.

In some examples, the training data set may comprise, for each asset of the group of assets, average historical values of the input parameter over a second time period, and average historical values of the output parameter over the second time period.

In some examples, the predetermined distance threshold may denote a boundary in the feature space between normal deviations in behaviour of the asset and abnormal deviations in behaviour of the asset.

In some examples, the predetermined distance threshold may denote a boundary in the feature space between normal deviations in behaviour of the asset over a first time period, and abnormal deviations in behaviour of the asset over the first time period.

In some examples, the processing circuitry may be configured to determine the distance by: determining a distance of the data point relative to a centroid of the cluster of data points.

In some examples, the processing circuitry may be further configured to: in response to the abnormal asset behaviour prediction, perform one or more actions on the asset.

In some examples, the one or more actions may comprise one or more of: scheduling maintenance of the asset; altering the operation of the asset; and altering the control of the asset.

In some examples, the input parameter may comprise any of: an altitude at which the engine is/was operating, a temperature of the environment in which the engine is/was operating, a pressure in the environment in which the engine is/was operating, a flow rate of a fluid within the engine, a speed of the engine, a voltage in the engine, a fuel flow demand of the engine, a build configuration of the engine, a weather condition in the environment in which the engine is/was operating, a temperature of the engine, a power setting parameter of the engine, and a control system setting of the engine.

In some examples, wherein the asset is at least part of an engine, the output parameter may comprise any of: a temperature of the engine, a speed of the engine, a voltage in the engine.

In some examples, the measured value of the input parameter and/or the measured value of the output parameter may be obtained from one or more sensors on the engine.

In some examples, the asset may be any of: an engine, a part of an engine, a subsystem of an engine.

In some examples, wherein the engine may be a gas turbine engine.

In some examples, the assets may be of the same type.

According to an eleventh aspect of the present disclosure, there is provided a machine readable medium storing instructions which, when executed by a processor, cause the processor to carry out a method according to the ninth aspect of the present disclosure.

According to a twelfth aspect of the present disclosure, there is provided a computer program comprising instructions which, when executed by processing circuitry of a monitoring device, cause the monitoring device to perform the method according to the ninth aspect of the present disclosure.

BRIEF DESCRIPTION OF DRAWINGS

For a better understanding of the embodiments of the present disclosure, and to show how it may be put into effect, reference will now be made, by way of example only, to the accompanying drawings, in which:

FIG. 1 illustrates a monitoring device;

FIG. 2 illustrates another monitoring device;

FIG. 3 illustrates a training device;

FIG. 4 shows an architecture that may be utilised at least in part in methods of monitoring the health of an asset;

FIG. 5 shows how an observed data space may be mapped to a feature space;

FIG. 6 is a flow chart illustrating process steps in a method of monitoring the health of an asset;

FIG. 7 is a flow chart illustrating process steps in another method of monitoring the health of an asset;

FIG. 8 is a flow chart illustrating process steps in a method of training an encoder model to map inputs representing nominally healthy assets to a cluster of data points;

FIG. 9 shows the resulting feature space projections for determined residuals for nine engines;

FIG. 10 shows an example of data evolution in a feature space, for two of the nine engines; and

FIG. 11 shows a number of receiver operating characteristic (ROC) curves for a number of fault detection methods.

DETAILED DESCRIPTION

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject-matter disclosed herein. The disclosed subject-matter should not be construed as limited to only the embodiments set forth herein; rather, these embodiments are provided by way of example to convey the scope of the subject-matter to those skilled in the art.

In some instances, detailed descriptions of well-known methods, entities, interfaces, circuits, and devices are omitted so as to not obscure the description with unnecessary detail. Those skilled in the art will appreciate that the functions described may be implemented in one or more entities using hardware circuitry (e.g., analogue and/or discrete logic gates interconnected to perform a specialized function, ASICs, PLAs, etc.) and/or using software programs and data in conjunction with one or more digital microprocessors or general purpose computers. Entities that communicate using the air interface also have suitable radio communications circuitry. Moreover, where appropriate the technology can additionally be considered to be embodied entirely within any form of computer-readable memory, such as solid-state memory, magnetic disk, or optical disk containing an appropriate set of computer instructions that would cause a processor to carry out the techniques described herein.

Embodiments of the present disclosure propose methods of monitoring the health of an asset (e.g. a mechanical system or subsystem such as an engine, turbine or part thereof), and methods of training an encoder model to map inputs representing nominally healthy assets to a cluster of data points. The proposed methods address the challenges of detecting anomalous behaviour in assets that are subject to degradation over time (that is, preventing the detection of apparent anomalies that arise as a result of variation in the operation of the asset and/or anticipated effects of aging of the asset, rather than variations in the health of the asset). The challenges are addressed by representing data that represents the behaviour and/or the health of the asset in a manner that removes operational variation, and constraining the structure of a feature space to which this data is then mapped, and in which the anomaly detection is performed. The feature space is a meaningful feature representation for data that is affected by multiple sources of variation (for example, data that is generated by an engine). Knowledge of causality in the asset may be used to constrain the feature space, such that the feature space is representative of typical asset behaviour as it degrades. Performing anomaly detection in this manner enables anomalies that arise due to variations in the health of the asset, and not anomalies that arise due to operational variability, to be effectively detected.

Certain embodiments described herein utilise a deep neural network architecture in order to learn a 'fleet wide', or 'group wide'; mapping for a group of assets, from operational input data obtained from the group of assets, to output data that is representative of typical or expected behaviour across the group of assets. The group of assets may comprise assets which are nominally similar. For example, the assets in a group may all comprise a particular type of Gas Turbine engine (GTE), or some other engine type, or a particular type of vehicle (e.g. a type of aircraft, type of car, type of boat or the like). The assets in a group may have all been manufactured according to a particular standard, have been manufactured in the same batch, and/or comprise the same components. In these embodiments, 'residuals' (i.e. differences between observed and predicted values of data) are then determined from this output data, that reflect how the behaviour of an asset (of which the health is being monitored) deviates from this typical or expected behaviour across the group. These residuals are then used within a deep novelty detection framework. The deep novelty detection framework produces a n-dimensional feature space in which data that represents typical or expected asset behaviour that has been mapped to the feature space is clustered together. If a data point in this feature space is a significant distance from this cluster, this may be indicative of fault behaviour of the asset.

In embodiments described herein, an asset (for example, GTE, or a part of a GTE) is a system that is subject to slow nominal intrinsic degradation, acceptable extrinsic disturbances and the risk of abnormal intrinsic anomalies/faults. It will be appreciated that the expected behaviour of an asset may be affected by multiple sources of variation such as build and operating conditions (for example, the age of the asset, use of the asset, maintenance of the asset, etc).

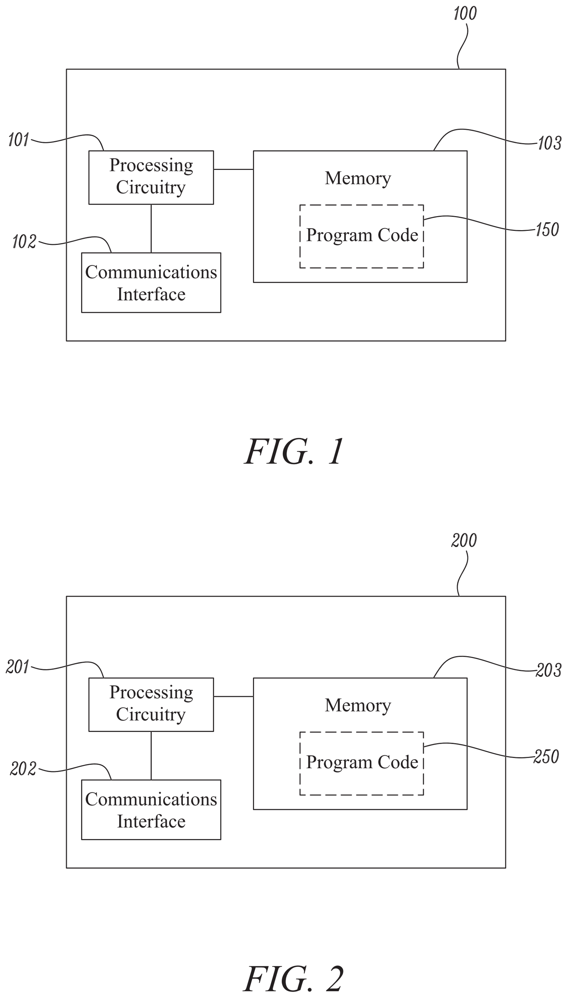

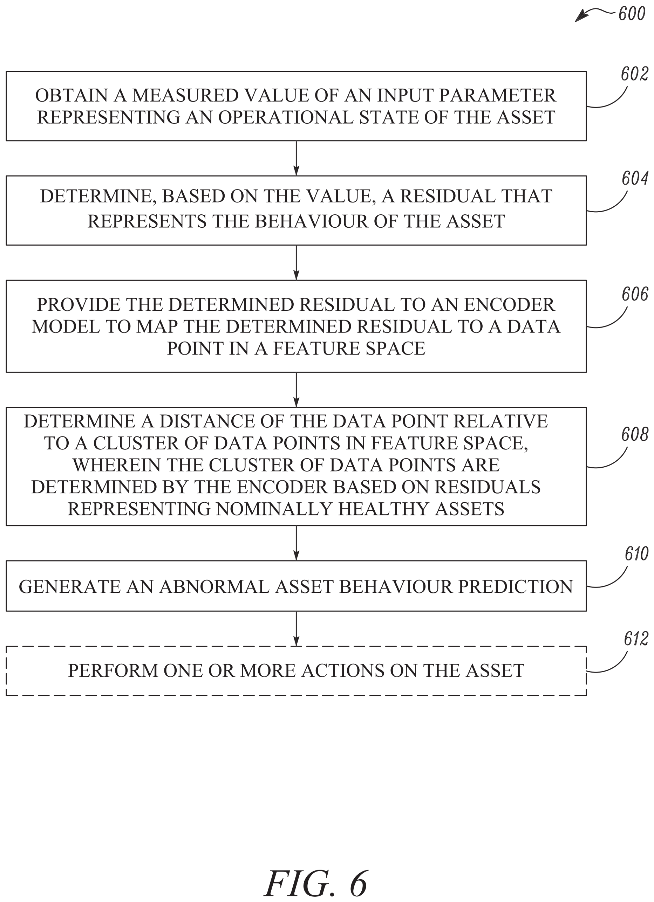

FIG. 1 illustrates a monitoring device 100 comprising processing circuitry (or logic) 101. The processing circuitry 101 controls the operation of the monitoring device 100 and can implement the method described with reference to FIG. 6. The processing circuitry 101 can comprise one or more processors, processing units, multi-core processor modules or the like that are configured or programmed to control the monitoring device 100 to implement the method described with reference to FIG. 6. **In** particular implementations, the processing circuitry 101 can comprise a plurality of software and/or hardware modules that are each configured to perform, or are for performing, individual or multiple steps of the method 600 described herein. It will be appreciated that the monitoring device 100 may comprise one or more virtual machines running different software and/or processes. The monitoring device 100 may therefore comprise, or be implemented in or as one or more servers, switches and/or storage devices and/or may comprise cloud computing infrastructure that runs the software and/or processes.

Optionally, the monitoring device 100 may comprise a memory 103. **In** some embodiments, the memory 103 of the monitoring device 100 can be configured to store instructions (e.g. program code 150) executable by the processing circuitry 101 of the monitoring device 100 whereby the monitoring device is operable to perform the method as described with reference to FIG. 6.

Alternatively or in addition, the memory 103 of the monitoring device 100, can be configured to store any requests, resources, information, data, signals, or similar that are described herein. The processing circuitry 101 of the monitoring device 100 may be configured to control the memory 103 of the monitoring device 100 to store any requests, resources, information, data, signals, or similar that are described herein.

In some embodiments, the monitoring device 100 may optionally comprise a communications interface 102. The communications interface 102 of the monitoring device 100 can be for use in communicating with other devices, such as other virtual devices or nodes. For example, the communications interface 102 of the monitoring device 100 can be configured to transmit to and/or receive from other devices any or any combination of: requests, resources, information, data, signals, or similar. The processing circuitry 101 of the monitoring device 100 may be configured to control the communications interface 102 of the monitoring device 100 to transmit to and/or receive from other devices any or any combination of: requests, resources, information, data, signals, or similar. The communications interface 102 can use any suitable communication technology.

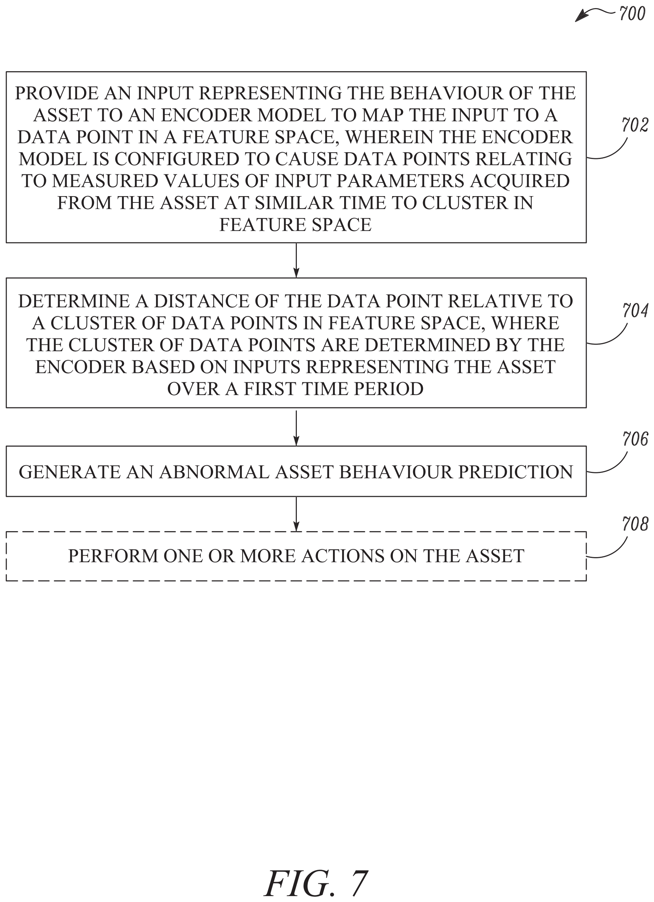

FIG. 2 illustrates a monitoring device 200 comprising processing circuitry (or logic) 201. The processing circuitry 201 controls the operation of the monitoring device 200 and can implement the method described with reference to FIG. 7. The processing circuitry 201 can comprise one or more processors, processing units, multi-core processor modules or the like that are configured or programmed to control the monitoring device 200 to implement the method described with reference to FIG. 7. **In** particular implementations, the processing circuitry 201 can comprise a plurality of software and/or hardware modules that are each configured to perform, or are for performing, individual or multiple steps of the method 700 described herein. It will be appreciated that the monitoring device 200 may comprise one or more virtual machines running different software and/or processes. The monitoring device 200 may therefore comprise, or be implemented in or as one or more servers, switches and/or storage devices and/or may comprise cloud computing infrastructure that runs the software and/or processes.

Optionally, the monitoring device 200 may comprise a memory 203. **In** some embodiments, the memory 203 of the monitoring device 200 can be configured to store instructions (e.g. program code 250) executable by the processing circuitry 201 of the monitoring device 200 whereby the monitoring device is operable to perform the method as described with reference to FIG. 7.

Alternatively or in addition, the memory 203 of the monitoring device 200, can be configured to store any requests, resources, information, data, signals, or similar that are described herein. The processing circuitry 201 of the monitoring device 200 may be configured to control the memory 203 of the monitoring device 200 to store any requests, resources, information, data, signals, or similar that are described herein.

In some embodiments, the monitoring device 200 may optionally comprise a communications interface 202. The communications interface 202 of the monitoring device 200 can be for use in communicating with other devices, such as other virtual devices or nodes. For example, the communications interface 202 of the monitoring device 200 can be configured to transmit to and/or receive from other devices any or any combination of: requests, resources, information, data, signals, or similar. The processing circuitry 201 of the monitoring device 200 may be configured to control the communications interface 202 of the monitoring device 200 to transmit to and/or receive from other devices any or any combination of: requests, resources, information, data, signals, or similar. The communications interface 202 can use any suitable communication technology.

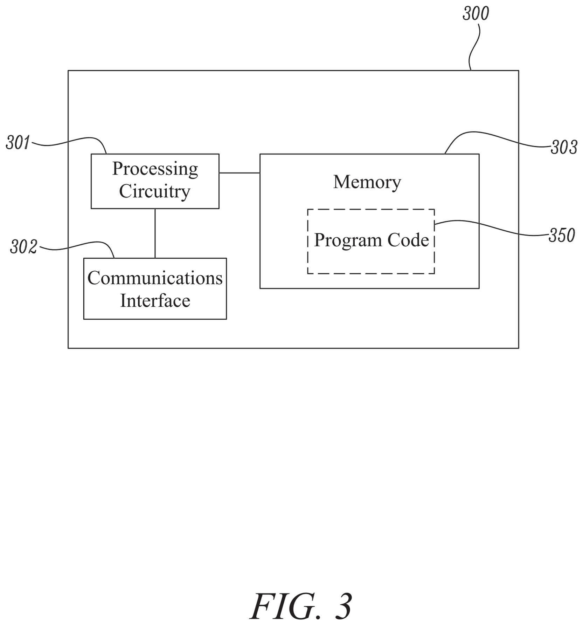

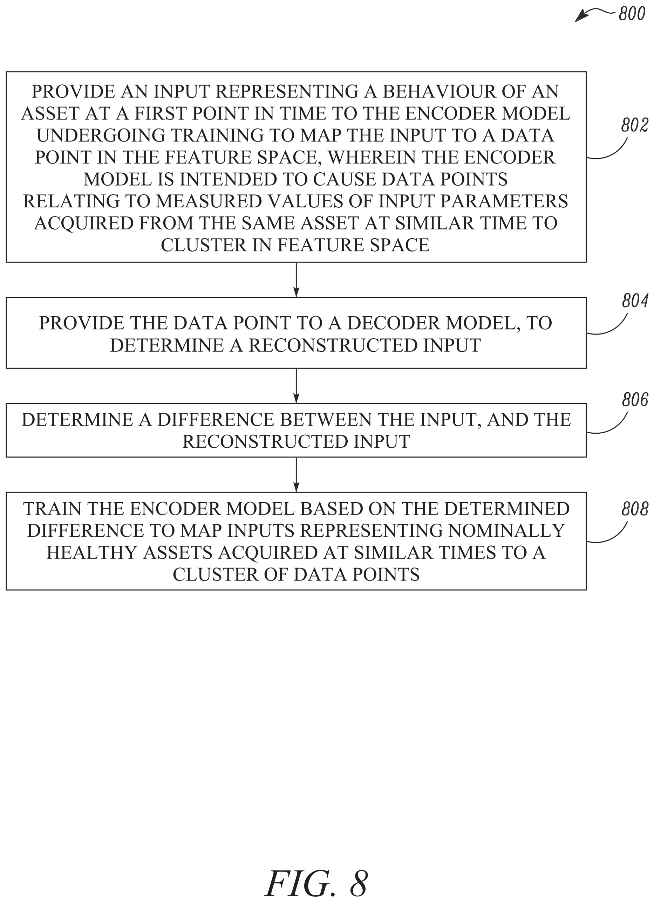

FIG. 3 illustrates a training device 300 comprising processing circuitry (or logic) 301. The processing circuitry 301 controls the operation of the training device 300 and can implement the method described with reference to FIG. 8. The processing circuitry 301 can comprise one or more processors, processing units, multi-core processor modules or the like that are configured or programmed to control the training device 300 to implement the method described with reference to FIG. 8. **In** particular implementations, the processing circuitry 301 can comprise a plurality of software and/or hardware modules that are each configured to perform, or are for performing, individual or multiple steps of the method 800 described herein. It will be appreciated that the training device 300 may comprise one or more virtual machines running different software and/or processes. The training device 300 may therefore comprise, or be implemented in or as one or more servers, switches and/or storage devices and/or may comprise cloud computing infrastructure that runs the software and/or processes.

Optionally, the training device 300 may comprise a memory 303. **In** some embodiments, the memory 303 of the training device 300 can be configured to store instructions (e.g. program code 350) executable by the processing circuitry 301 of the training device 300 whereby the training device is operable to perform the method as described with reference to FIG. 8.

Alternatively or in addition, the memory 303 of the training device 300, can be configured to store any requests, resources, information, data, signals, or similar that are described herein. The processing circuitry 301 of the training device 300 may be configured to control the memory 303 of the training device 300 to store any requests, resources, information, data, signals, or similar that are described herein.

In some embodiments, the training device 300 may optionally comprise a communications interface 302. The communications interface 302 of the training device 300 can be for use in communicating with other devices, such as other virtual devices or nodes. For example, the communications interface 302 of the training device 300 can be configured to transmit to and/or receive from other devices any or any combination of: requests, resources, information, data, signals, or similar. The processing circuitry 301 of the training device 300 may be configured to control the communications interface 302 of the training device 300 to transmit to and/or receive from other devices any or any combination of: requests, resources, information, data, signals, or similar. The communications interface 302 can use any suitable communication technology.

There is also provided a computer program comprising instructions which, when executed on at least one processing circuitry (such as the processing circuitry 101 of the monitoring device 100 described earlier), cause the processing circuitry to carry out at least part of the method(s) described herein. According to some embodiments there is provided a carrier containing the computer program. In some embodiments, the carrier can be any one of an electronic signal, an optical signal, an electromagnetic signal, an electrical signal, a radio signal, a microwave signal, or a computer-readable medium. There is also provided a (for example, tangible and/or non-transient) computer-readable medium comprising instructions which, when executed by at least one processing circuitry, cause at least one processing circuitry to perform at least part of the method(s) described herein.

It will be appreciated that the devices 100, 200 and 300 may be the same device, or may be different from one another. It will also be appreciated that some or all of the methods 600, 700 and 800 may be performed by the same device (any of devices 100, 200 or 300), or the methods 600, 700 and 800 may be performed by the devices 100, 200, and 300 respectively.

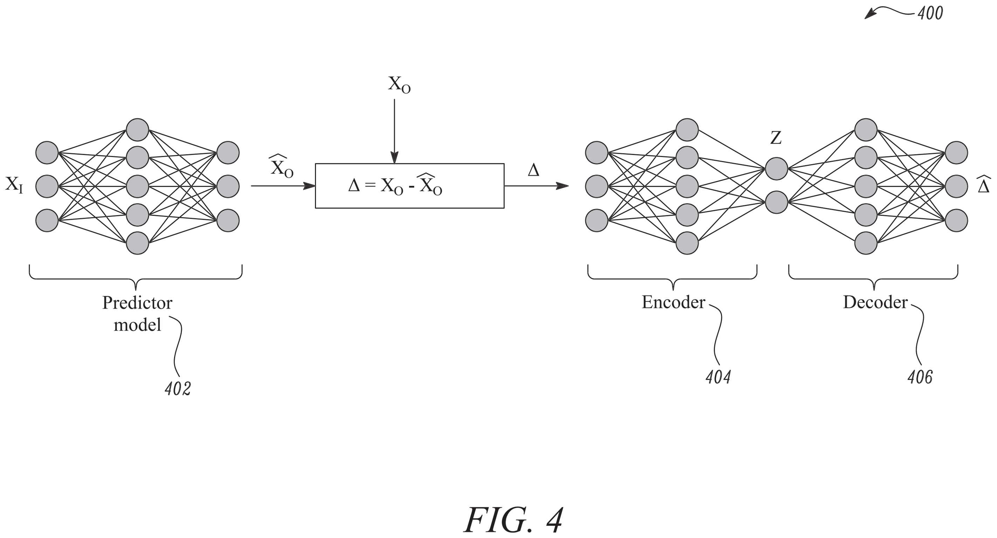

FIG. 4 shows an architecture 400 that may be utilised at least in part in certain methods of monitoring the health of an asset, in accordance with certain embodiments described herein. The architecture 400 comprises a predictor model 402, an encoder model 404, and, in some examples, a decoder model 406. It is noted that, in examples where both the encoder model 404 and the decoder model 406 are present, the combination of the encoder model 404 and the decoder model 406 is an autoencoder model. Components of the architecture 400 may be used for detecting anomalies in data generated by a fleet or group of assets subject to slow normal intrinsic degradation, for example, such as a fleet of aerospace GTEs. The architecture 400 may be utilised to identify anomalous health of such assets, despite the variability these assets may be subject to as described above.

The predictor model 402 is a deep neural network (for example, a fully-connected neural network) that has been trained to predict output parameters $X_O$ that represent the expected behaviour of a representative asset of a group of assets (for example, a fleet of GTEs within a group of respective aircraft), based on one or more input parameters $X_I$ that represent the operating conditions of a particular asset of that group. A representative asset, for example, may be an average asset of the group of assets, or a model of an asset that has been built from an individual asset's (in the group of assets) own history (for example, a digital twin of the individual asset), or a "fleet model" that represents an average asset of the group of assets that has been further trained using data relating to a specific asset to make this generalised "fleet model" more specific.

The predictor model 402 is trained using a training data set comprising, for each asset of the group of assets, historical values of the input parameter(s) and historical values of the output parameter(s). As the predictor model 402 is trained using training data that has been obtained across the entire group of assets, the predictor model 402 is able to predict average behaviour across the group of assets for the operating conditions that the input parameter(s) represent. For example, the predictor model 402 may be trained to predict the behaviour of a representative asset of the group of assets.

Training the predictor model 402 may comprise updating values of trainable parameters of the predictor model 402 to minimize a value of a Mean Squared Error (MSE) loss function.

The historical values of the input parameter(s), and the historical values of the output parameter(s), may have been obtained over a particular time period for each asset of the group, in which each asset was in a particular operational state. For example, for a fleet of GTEs within a group of respective aircraft, the historical parameters may have been respectively obtained during at least one, or each, particular operational cycle period for each asset (for example, take-off, climb, cruise, etc.)

In one particular example, seventy-six thousand, one hundred and eighty-six values of input parameters were obtained for a group of sixty two GTEs within respective aircraft over three years. This data was then used to train a predictor model 402 to predict expected behaviour across this group of sixty two GTEs. This predictor model 402 may then be used to assess the health of a GTE within an aircraft.

Each training data entry comprised values representative of (i) parameters indicative of an operational state of the asset and (ii) behaviours of the asset, wherein the model is to be trained to predict behaviours from at least one input indicative of an operational state.

It will be appreciated that the input parameters on which the machine learning model is trained (and those that are subsequently provided to the trained machine learning model) will depend on the output parameter(s) that are to be predicted. For example, for a gas turbine engine, the training data may be comprised of operational inputs such as altitude, mach number, ambient temperature, and a commanded thrust setting parameter, along with measured output values such as shaft speeds, gas path temperatures and pressures, that have all been collected at specific points in a flight, such as take-off, climb, and cruise.

The model may be a fully connected Neural Network trained using MSE loss function. It will be appreciated that, in examples in which the model is a neural network, the type of neural network may depend on the training data that is used. For example, a recurrent neural network, or a convolutional neural network may be required for time-series training data.

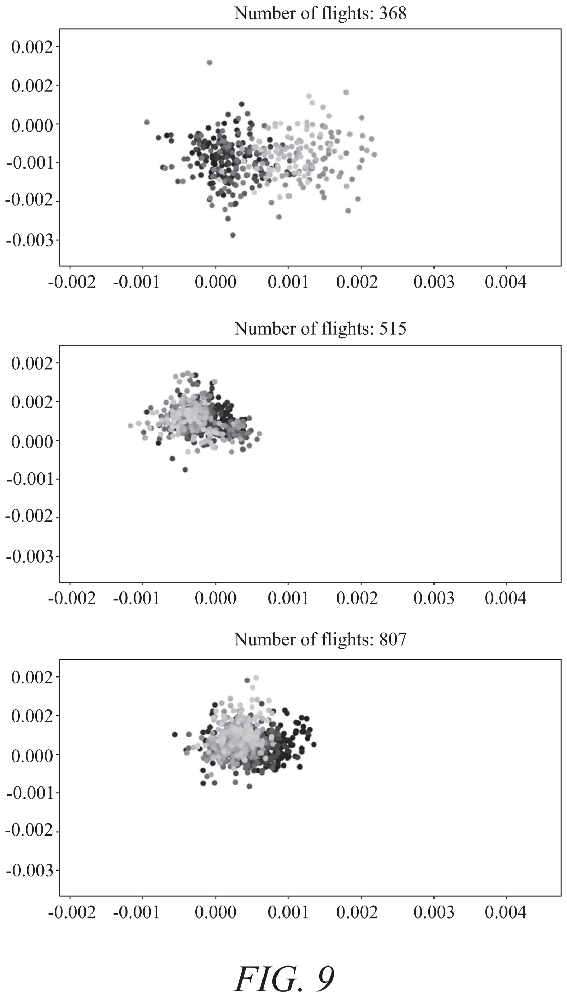

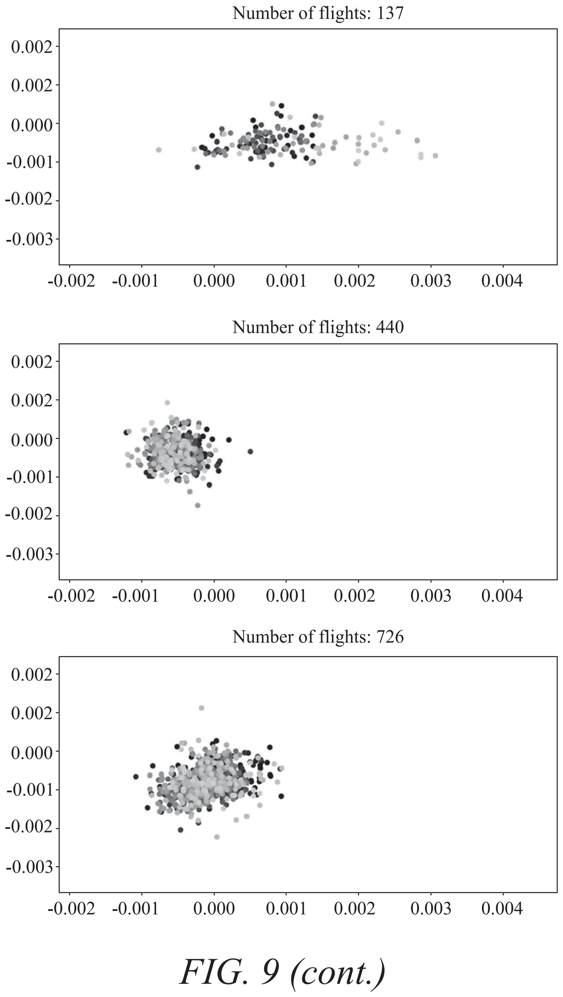

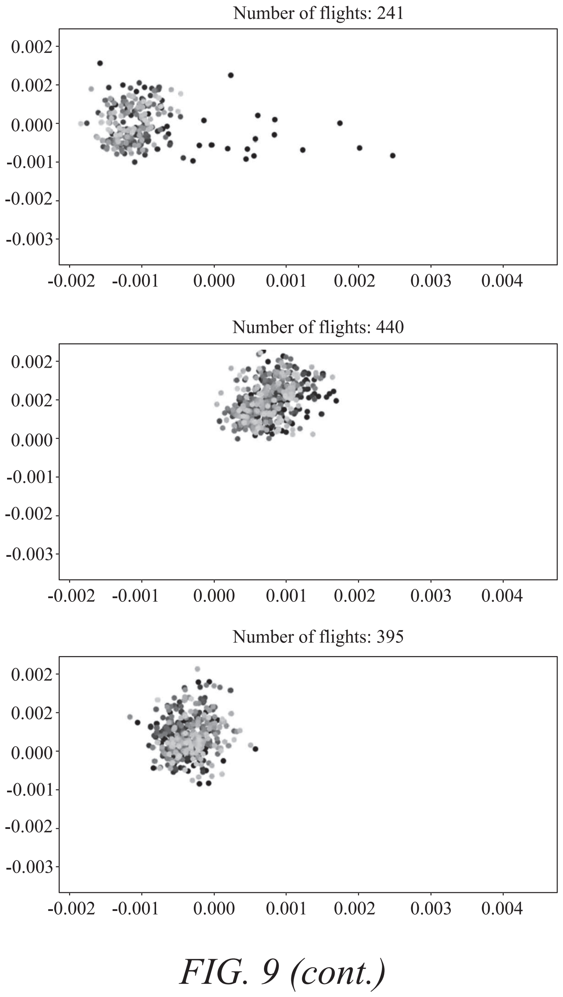

In the example described with reference to FIG. 9, the predictor model used comprised 6 fully connected layers. It will be appreciated that the number of inputs provided to the predictor model 402, and the number of outputs the predictor model 402 generates, will be use case specific (for example, the number of input, and the number of outputs, may depend on the type of asset being monitored, which component of an asset is being monitored, etc.). In the example described with reference to FIG. 9, the size of the layers comprised in the predictor model were, nine, two hundred and fifty six, two hundred and fifty six, two hundred and fifty six, two hundred and fifty six, and nine, respectively. In this example, leaky rectified linear units were used as the activation functions. It will be appreciated that this is one example of the architecture of the predictor model 402, and any other suitable architecture may be utilized.

In another example, the group of assets comprised a group of oil subsystems within a respective group of eight hundred and three GTEs. In this example, two hundred seventy-one thousand one hundred twenty-four values of input parameters were obtained for the group of eight hundred and three oil subsystems over a year. This data was then used to train a predictor model 402 to predict expected behaviour across this group of eight hundred and three oil subsystems. This predictor model 402 may then be used to assess the health of an oil subsystem within a GTE.

In this example, where each asset is a gas turbine engine, each training data entry comprised values representative of the following parameters: one or more internal temperatures, pressure, and a pump speed related to a fluid system rather than the primary gas path. Values for each of these parameters were collected at specific points in each flight, such as take-off, climb, and cruise.

It will be appreciated that, based on the input parameters that are used to train the predictor model 402 (for example, based on whether the input parameters relate to the asset as a whole, or a part of the asset (for example, an oil subsystem)), the predictor model 402 may be trained to predict behaviour that is representative of an asset as a whole, a part of an asset, etc. The predictor model 402 may then be used to assess the health of an asset as a whole, a part of the asset, etc.

It will be appreciated that utilising multiple input parameters, both to train the encoder model 404 and in a method of asset health monitoring, may improve confidence in the result of the method and increase the number of potential health issues that can be detected using these methods.

Following this training process, one or more measured values of the input parameter(s) (that is, the input parameter(s) used during the training process) are provided as an input to the predictor model 402, and the predictor model 402 then outputs a predicted value of an output parameter that represents the behaviour of a representative asset of a group of assets. The predicted output parameter $\hat{X}_0$ is then subtracted from a measured value $X_o$ of the output parameter for the asset (for which the health is being monitored), to determine a residual.

The behaviour of an asset, as described above, relates to measured outputs for a set of measured inputs. Behaviour can be normal or abnormal/anomalous. Residuals are the gap between measured behaviour to expected behaviour. Residuals are small for normal behaviour, and larger for abnormal behaviour.

The determined residual represents how the behaviour of the asset deviates from the behaviour that is expected (across the group of assets) for the measured operating conditions that were provided to the predictor model 402. It will be appreciated that, as the residual is generated based on the expected behaviour across the group of assets, this removes variation due to operating conditions of the asset in this representation of the behaviour of the asset.

As the predictor model 402 has been trained to predict average behaviour across the group of assets, a large residual will result from a significant deviation between the behaviour of the asset (for which the health is being monitored), and the average asset behaviour across the group.

In alternative embodiments, a residual may instead be determined by comparing observed data from the asset (that is representative of the behaviour or the health of the asset) to an output of a first principles model of the asset as built (where this first principles model has been tuned on real data). However, it will be appreciated that utilising the predictor model 402 allows for a residual to be determined for either asset parameters themselves, or assets as a whole, that do not have a first principles derived model available.

The determined residual $\Delta$, is then provided as an input to the encoder model 404, which is also a deep neural network. The encoder model 404 encodes the determined residual $\Delta$ into a feature space Z. Residuals that represent typical asset behaviour will be mapped to a cluster of data points in the feature space Z that is representative of typical asset behaviour (and reflects normal variation in the group of assets). Anomalous data (which is representative of atypical asset behaviour) will be mapped outside of this cluster.

In a training process, the encoder model 404 encodes the determined residual $\Delta$ into the feature space Z as a data point z, and then the data point z is provided as an input to the decoder model 406 to determine a reconstructed residual. The decoder model 406 is also a deep neural network. It will be appreciated that the decoder model 406 is only used during the training process of the encoder model 404. For inference, only use of the predictor model 402 and the (trained) encoder model 404 is required.

This training process comprises updating values of trainable parameters of the encoder model 404 to minimize a value of a loss function. The loss function is as follows:

$$L = L_1 + L_2 + L_3$$

The first component of the loss function, $L_1$, is:

$$L_1 = \frac{1}{n} \sum_{i=1}^{n} \sum_{k=1}^{n} \lambda_{ik} \left|\left| z_i - z_k \right|\right|^2$$

where:

n is the total number of data points,
$z_i$ (where i = 1, ..., n) is the $i^{th}$ data point in the feature space,
$z_k$ (where k = 1, ..., n) is the $k^{th}$ data point in the feature space, and
$\lambda_{ik}$ is a parameter that causes data points relating to measured values of input parameters acquired from the same asset that are closer in time to tend to be clustered in feature space.

It will be appreciated that $\gamma$ acts as a time decay penalty. In training, the encoder model 404 will be penalised if data, from the same asset and recorded closer in time, are not mapped close to each other in the feature space. The penalty decays as the time between the two recorded data points increases. The value of $\gamma$ may be predetermined, and may be determined based on the type of the asset, and how quickly it is expected to degrade. In this embodiment, $\lambda_{ik} = e^{-\gamma \Delta t^2}$ if the data points $z_i$ and $z_k$ represent the same asset, and $\lambda_{ik} = 0$ otherwise. $\Delta t$ is the time difference between when the data points were obtained.

The $L_1$ component of the loss function constrains the feature space by encouraging data from the same asset to be mapped close together in the feature space, with a slow shift in the data distribution over time due to degradation in the asset (which is induced by the dynamic value $\lambda_{ik}$).

As noted above, the assets degrade during their lifetime, and may be modified during maintenance.

Therefore, the distribution of the data generated by an asset (that may still be reflective of normal asset behaviour as it degrades) changes over time. The dynamic value $\lambda_{ik}$ therefore allows these normal behaviour changes (that evolve in time over the lifetime of the asset) to be reflected in the feature space. **In** contrast, a static value for $\lambda_{ik}$ (for example, where $\lambda_{ik} = 1$ when $z_i$ and $z_k$ are data recorded from the same asset, and zero otherwise) would force all data from the same asset to be mapped close together in the feature space, regardless of the asset's degradation, and thus is an overly restrictive approach for performing anomaly detection on this evolving data.

The second component of the loss function, $L_2$, is:

$$L_2 = \frac{1}{n} \sum_{i=1}^{n} \left\| \Delta_i - \widehat{\Delta}_i \right\|^2$$

where:

    n is the total number of inputs,
    $\Delta_i$ (where i = 1, ..., n) is the $i^{th}$ input, and
    $\widehat{\Delta}_i$ is the $i^{th}$ reconstructed input.

The second component of the loss function $L_2$ is therefore configured to penalise dissimilarity between the input to the encoder model 404, and the reconstructed input generated by the decoder model 406. $L_2$ is therefore the component of the loss function that encourages reconstruction of the input that is provided to the encoder model 404 at the output of the decoder model 406, and hence prevents information from being lost as the encoder model 404 maps a residual to the feature space.

The third component of the loss function, $L_3$, is:

$$L_3 = \frac{1}{n} \sum_{i=1}^{n} \left\| z_i - c \right\|^2$$

where:

    n is the total number of data points,
    $z_i$ (where i = 1, ..., n) is the $i^{th}$ data point in the feature space, and
    c is a centroid of the cluster of data points representing nominally healthy assets.

By minimizing the value of the third component of the loss function during the training process, the encoder model 404 is trained to minimize a volume of a hypersphere in Z that contains the transformed data points that represent nominally healthy assets. That is, the encoder model 404 is trained to closely cluster the transformed data points that represent nominally healthy assets. In order to minimize the value of the third loss function component, the encoder model 404 learns to extract the common factors of variation to map data points to the centre of this hypersphere. This means that asset behaviour that is well represented in the dataset will fall within the hypersphere, and data from assets with similar behaviour will then be expected to be projected close to each other within the feature space. Conversely, data with factors or behaviours that are not well understood (e.g., anomalies) will tend to be mapped far from the centre of the cluster. $L_3$ is therefore configured to cause data points representing nominally healthy assets to cluster in feature space.

$L_3$ therefore effectively transforms the feature space into a hypersphere that represents typical asset behaviour, and any data points that fall outside this sphere will be considered to be anomalous, and possibly be caused by an asset health problem.

As noted above, the determined residual $\Delta$, is provided as an input to the encoder model 404, which encodes the determined residual $\Delta$ into the feature space Z. FIG. 2 shows how an observed data space 200a (for example, comprising determined residuals) may be mapped to a feature space 200b by the encoder model 404.

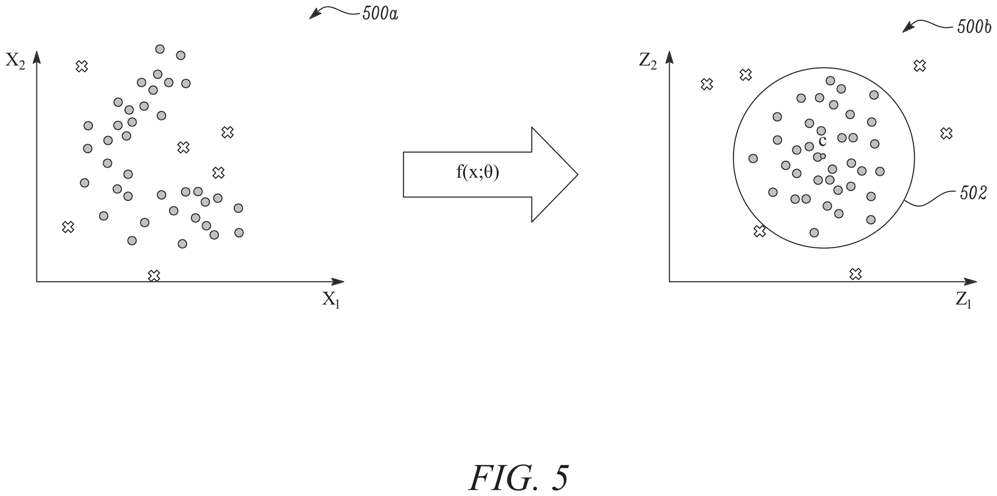

As noted above, by training the encoder model 404 such that a value of the aforementioned loss function is minimised, the encoder model 404 is trained to cause residuals representing typical (or normal) asset behaviour to cluster together when they are mapped in the feature space. This clustering is illustrated in FIG. 5, in which data with common factors of variation in the observed data space 200a, are clustered together in the feature space 500b, and mapped near the centre c of the cluster 502. The encoder model 404 is also trained to cause residuals that represent atypical asset behaviour (which may be caused by an asset fault) to be mapped further away from the centre of the cluster 502. This anomalous data is also shown in FIG. 5. If a data point does not fall within the cluster 502, this may be indicative of an asset fault or health issue of the asset to which the data point corresponds.

As seen in the observed data space 200a, prior to the mapping, the data points (that is, the determined residuals) representing typical (or normal) asset behaviour have no particular relationship with each other in terms of how they are distributed in the observed data space 200a. This is also the case for the data points representing atypical asset behaviour. That is, in the observed data space 200a, no determination can be made on whether any particular data point represents typical asset behaviour, or not, based on its position in the observed data space 200a. Performing the aforementioned mapping these data points to the to the feature space 200b, enables a determination to be made on whether any particular data point represents typical asset behaviour, or not, based on its position in the feature space 200b.

FIG. 6 is a flow chart illustrating process steps in a method 600 for monitoring the health of an asset. The steps of the method 600 may be implemented by at least some of the entities within the architecture 400 described above. The asset may for example be any of: an engine (for example, a GTE), a part of an engine, or a subsystem of an engine.

Referring to FIG. 6, the method 600 comprises, in a first step 602, obtaining a measured value of an input parameter representing an operational state of the asset. In embodiments where the asset is at least part of an engine, the input parameter may comprise any or any combination of: an altitude at which the engine is operating, a temperature of the environment in which the engine is operating, a pressure in the environment in which the engine is operating, a flow rate of a fluid within the engine, a speed of the engine, a voltage in the engine, a fuel flow demand of the engine, a build configuration of the engine, a weather condition in the environment in which the engine is operating, a temperature of the engine, a power setting parameter of the engine (e.g. a shaft speed), and a control system setting of the engine (e.g. an actuator position). For example, where the asset is a GTE in an aircraft, the input parameter may represent operating conditions during a particular stage of an operational cycle (for example, cruise, take-off, landing) that is being undertaken or has previously been taken by the aircraft. Several values of the input parameter may be measured over such an operational cycle period, and used in the method 600 described herein, or one aggregate or characteristic value of the input parameter across such an operational cycle period may be used. The measured value of the input parameter may be obtained from one or more sensors on the asset.

The assets described above may be nominally the same, or similar, for example being of the same type (e.g. same model, or same class of mechanical system). For example, each asset of the group may be an aerospace GTE with the same initial build configuration.

At step 604, the method 600 comprises determining a residual that represents the behaviour of the asset (for example, a difference of the behaviour of the asset to "normal" behaviour). In some embodiments, step 604 may comprise providing the value as an input to a trained machine learning model (for example, the predictor model 402 described above), to obtain, from the trained machine learning model, a respective predicted value of an output parameter that represents the behaviour of a representative asset of a group of assets. The residual may then be determined as the difference between the predicted value of the output parameter and a measured value of the output parameter for the asset. In one embodiment, the machine learning model may be trained to predict the normal system or subsystem behaviour of a genericised representative asset based upon historical data from a group of assets. In another embodiment, the machine learning model may be asset specific, and trained on historical data from only this specific asset. In another embodiment, the residual may be determined by comparing the measured output parameter to the output of a first principles model of the asset.

In some embodiments, where the asset is at least part of an engine, the output parameter may comprise any or any combination of: a temperature of the engine, a speed of the engine, a voltage in the engine, or the like. As noted above, the value of the output parameter may represent the behaviour of the asset. As noted above, the behaviour of an asset is reflected by the measured outputs for a set of measured inputs. For example, considering a pump, the values of the output parameters may be measured values of exit temperature, pressure and mass flow, and the values of the input parameters may be measured values of speed, inlet temperature and pressure. The behaviour of the pump in this case would be reflected by the values of the output parameters that are measured for these particular measured values of the input parameters.

The measured value of the input parameter and/or the measured value of the output parameter may be obtained from one or more sensors, for example provided on the asset.

The machine learning model may be trained using a training data set comprising, for each asset of the group of assets, historical values of the input parameter and historical values of the output parameter. It will be appreciated that when the machine learning model is trained using such a training dataset, that has been obtained across the entire group of assets, the machine learning model is trained to predict average behaviour across the group of assets.

The training data set may comprise, for each asset of the group of assets, average historical values of the input parameter over a particular time period, and average historical values of the output parameter over that time period. For example, the historical values of the input parameter, and the historical values of the output parameter, may have been obtained over a particular time period for each asset, in which each asset was in a particular operational state. For example, for a fleet of GTEs within a group of respective aircraft, the historical parameters may have been obtained over a particular operational cycle period for each asset (for example, data may be averaged over a time period around the peak temperatures observed during take-off). The time periods may for example be less than a second, a few seconds, a few minutes or longer.

At step 606, the method 600 comprises providing the determined residual to an encoder model (for example, the encoder model 404) to map the determined residual to a data point in a feature space. As noted above, the encoder model 404 may have been trained (as described above) to generate a cluster of data points based on residuals representing nominally healthy assets. The determined residual will be mapped to a point in the feature space that is a particular distance away from this cluster of data points, where this distance depends on how much the determined residual indicates anomalous behaviour of the asset.

At step 608, the method 600 comprises determining a distance of the data point relative to a cluster of data points in feature space, wherein the cluster of data points are determined by the encoder based on residuals representing nominally healthy assets. Determining the distance may comprise determining a distance of the data point relative to a centroid of the cluster of data points (for example, the centroid c illustrated in FIG. 5). In other examples, the distance may be determined relative to any other determined point or locus of the cluster, for example a boundary thereof. In other words, at step 608, the distance may be determined by measuring from the data point to any other determined point or locus of the cluster, for example, a boundary thereof or the centroid c.

The cluster of data points may be determined by the encoder based on residuals representing nominally healthy assets over a first time period. The first time period may be any suitable time period over which the asset has undergone expected deterioration. For example, the first time period may comprise a 'look-back' window reflecting data acquired in a preceding time period of a predetermined length. Therefore, the cluster may represent how the normal (or expected) behaviour of the asset changes over time as the asset ages and deteriorates. In other words, the cluster is designed to model expected deterioration of an asset, such that this expected deterioration does not raise a false detection during the anomaly detection. However, acute deterioration of the asset, that deviates from this expected deterioration, will still be able to be identified.

At step 610, the method 600 comprises, in response to the determined distance exceeding a predetermined distance threshold, generating an abnormal asset behaviour prediction. In some embodiments, the method 600 may further comprise issuing a warning of an asset health problem, either in response to the determined distance exceeding the predetermined distance threshold, or in response to the abnormal asset behaviour prediction being generated. The predetermined distance threshold may denote a boundary in the feature space between normal behaviour of the asset and abnormal behaviour of the asset (for example, the radius of the circle centred at c in FIG. 2). Thus, if the determined distance exceeds this predetermined threshold, this indicates that the data point is anomalous. This anomalous behaviour may be the result of an asset fault or an asset health problem. The predetermined distance threshold may be determined, or defined, based on an acceptable number of false positives. This acceptable number may be determined by analysing, or assessing, historical data points with known faults. It will be appreciated that larger predetermined distance thresholds will reduce the number of false positives detected, but will also reduce the amount of data points detected that represent truly anomalous behaviour. **In** other examples, the distance threshold may be set iteratively over time.

In some embodiments, the predetermined distance threshold denotes a boundary in the feature space between normal deviations in behaviour of the asset over a first time period, and abnormal deviations in behaviour of the asset over the first time period. The first time period may be any suitable time period over which the asset has undergone expected deterioration. Therefore, the predetermined distance threshold may, in these embodiments, denote a boundary in the feature space that accounts for the change in normal behaviour over time as the asset ages and deteriorates.

In some embodiments, the method 600 further comprises, at optional step 612, in response to the abnormal asset behaviour prediction, performing one or more actions on the asset. These actions may comprise one or more of: scheduling maintenance of the asset (to repair or replace damaged components), altering the operation of the asset, and altering the control of the asset (for example, deactivation of all or part of the asset to protect all or part of the asset from damage caused by the abnormal behaviour, or reconfiguration of the asset to reduce the load on components suspected to be nearing failure).

FIG. 7 is a flow chart illustrating process steps in another method 700 of monitoring the health of an asset.

The method 700 utilises an encoder model (for example, the encoder model 404) to map inputs representative of the behaviour of an asset to a constrained feature space. The feature space is a meaningful feature representation for data that is affected by multiple sources of variation. In this embodiment, knowledge of causality in the asset is to be used to constrain the feature space, such that the feature space is representative of typical asset behaviour as it degrades. Utilising such a feature space to perform anomaly detection enables anomalies that arise due to variations in the health of the asset, and not anomalies that arise due to operational variability, to be effectively differentiated.

The steps of the method 700 may be implemented by at least some of the entities within the architecture 700 described above. The asset may, for example, be any of: an engine (for example, a gas turbine engine), a part of an engine, or a subsystem of an engine.

The assets described above may be nominally similar or of the same type. For example, each asset of the group may be a particular type and/or class of engine (e.g. an aerospace GTE) with the same initial build configuration.

Referring to FIG. 7, the method 700 comprises, in a first step 702, providing an input representing the behaviour of the asset to an encoder model (for example, the encoder model 404) to map the input to a data point in a feature space. The encoder model (described above) is configured to cause data points relating to measured values of input parameters acquired from the asset at similar time to cluster in feature space.

The input (that is provided to the encoder model) may comprise a measured value of at least one input parameter representing an operational state of the asset at a first point in time.

As noted above, in examples where the asset is a gas turbine engine in an aircraft, the input parameter may represent operating conditions during a particular point in an operational cycle (for example, cruise, take-off, landing) that is being undertaken or has previously been taken by the aircraft. In some embodiments, the input may provide useful diagnostic information relating to an asset, and may be provided to the encoder as a raw or normalised value. For example, an oil level in the asset may be normalised zero-to-one, and provided to the encoder model, and/or a maintenance message may be 'one-hot' encoded, and provided to the encoder model.

The input parameter may be any or any combination of the input parameters described above with reference to the method 600. The value of the input parameter may be obtained from one or more sensors on the asset.

In some embodiments, the input to the encoder model may comprise a determined residual (that represents the behaviour of the asset). Determining the residual may comprise obtaining a measured value of an input parameter representing an operational state of the asset at a first point in time, providing the value as an input to a trained machine learning model (for example the predictor model 402), to obtain, from the trained machine learning model, a respective predicted value of an output parameter that represents the behaviour of a representative asset of a group of assets at the first point in time. The residual may then be determined as a difference between the predicted value of the output parameter and a measured value of the output parameter for the asset at the first point in time. That is, the residual may be determined in a similar manner as that described above with reference to FIG. 6. In another example, the residual may be determined in some other manner. For example, the residual may be determined by obtaining a steady state reading from a sensor on the asset, and then calculating a percentage difference of the steady state reading from a unique asset linear synthesis model for the asset to determine the residual. In this example, the residual represents the difference between the actual reading that has been obtained from the sensor on the asset, and the expected value of that reading based on the asset linear synthesis model, which represents the asset when it was first built, for example as described in patent publication US2010/0138132.

Where the asset is an aerospace GTE, the first point in time may be a point in time during a particular operational cycle period for the engine.

Where the asset is at least part of an engine, the output parameter may comprise or be representative of any, or any combination of: a temperature of the engine, a speed of the engine, a voltage in the engine. The measured value of the input parameter and/or the measured value of the output parameter may be obtained from one or more sensors on the engine, and in some examples, the method 700 may comprise obtaining the measurement value(s).

It will be appreciated that, utilizing a combination of a trained machine learning model (to determine the input that is provided to the encoder model), and the encoder model, in the method 700 may enable the effects of operational variation to be removed from the input to the encoder model.

In a similar manner to that described above with reference to FIG. 6, the machine learning model may be trained using a training data set comprising, for each asset of the group of assets, historical values of the input parameter(s) and historical values of the output parameter(s). It will be appreciated that when the machine learning model is trained using such a training dataset, that has been obtained across the entire group of assets, the machine learning model is able to predict average behaviour across the group of assets. In some examples, methods described herein may comprise training the machine learning model.

The training data set may comprise, for each asset of the group of assets, average historical values of the input parameter over a particular time period, and average historical values of the output parameter over the particular time period. For example, the historical values of the input parameter, and the historical values of the output parameter, may have been obtained over a particular time period for each asset, in which each asset was in a particular operational state. For example, for a fleet of gas turbine engines within a group of respective aircraft, the historical parameters may have been obtained over a particular operational cycle period for each asset (for example, data may be averaged over a time period around the peak temperatures observed during take-off). The time period in this context may be less than a second, a few seconds, a few minutes or longer.

In step 704, the method 700 comprises determining a distance of the data point relative to a cluster of data points in feature space, where the cluster of data points are determined by the encoder based on inputs representing the asset over a first time period. The first time period may be any suitable time period over which the asset has undergone expected deterioration. For example, the first time period may be hours, days, weeks or years, although it could be shorter in some examples. Therefore, the predetermined distance threshold may, in these embodiments, denote a boundary in the feature space that accounts for the change in normal behaviour over time as the asset ages and deteriorates.

As noted above, determining the distance may comprise determining a distance of the data point relative to a centroid of the cluster of data points, or to some other point or locus.

In step 706, the method 700 comprises, in response to the determined distance exceeding a predetermined distance threshold, generating an abnormal asset behaviour prediction. In some embodiments, the method 700 may further comprise issuing a warning of an asset health problem, either in response to the determined distance exceeding the predetermined distance threshold, or in response to the abnormal asset behaviour prediction being generated.. As noted above, the predetermined distance threshold may denote a boundary in the feature space between normal deviations in behaviour of the asset and abnormal deviations in behaviour of the asset (for example, the radius of the circle centred at c in FIG. 2). Thus, if the determined distance exceeds this predetermined threshold, this indicates that the data point is anomalous. This anomalous behaviour may be the result of an asset fault or an asset health problem.

In some embodiments, and as described above, the predetermined distance threshold denotes a boundary in the feature space between normal deviations in behaviour of the asset over a first time period, and abnormal deviations in behaviour of the asset over the first time period. The first time period may be any suitable time period over which the asset has undergone expected deterioration. Therefore, the predetermined distance threshold may, in these embodiments, denote a boundary in the feature space that accounts for the change in normal behaviour over time as the asset ages and deteriorates.

In some embodiments, the method 700 further comprises, at optional step 708, in response to the abnormal asset behaviour prediction, performing one or more actions on the asset. These actions may comprise one or more of: scheduling maintenance of the asset (to repair or replace damaged components), altering the operation of the asset, and altering the control of the asset (for example, deactivation of all or part of the asset to protect all or part of the asset from damage caused by the abnormal behaviour, or reconfiguration of the asset to reduce the load on components suspected to be nearing failure).

FIG. 8 is a flow chart illustrating process steps in a method 800 of training an encoder model (for example, the encoder model 404 described above, and/or the encoder model that is utilised in the methods 600 and/or 700 described above) to map inputs representing nominally healthy assets to a cluster of data points. The trained encoder model may then be used in the methods of monitoring the health of an asset described herein.

Referring to FIG. 8, the method 800 comprises, in a first step 802, providing an input representing a behaviour of an asset at a first point in time to the encoder model undergoing training to map the input to a data point in the feature space, wherein the encoder model (described above) is intended to cause data points relating to measured values of input parameters acquired from the same asset at similar time to cluster in feature space. By encouraging data from the same asset to be close together in the feature space, the impact of operating conditions on the behaviour of the asset are reduced in the mapping. This improves the structure of the feature space, and prevents possible anomalous behaviours from being masked by operating conditions when they are mapped to the feature space.

The input may comprise a residual representing any behaviour deviation from a nominally healthy asset (for example, the determined residual described with reference to the methods 600 and 700 described above).

At step 804, the method 800 comprises providing the data point to a decoder model, to determine a reconstructed input.

At step 806, the method 800 comprises determining a difference between the input, and the reconstructed input.

At step 808, the method 800 comprises training the encoder model based on the determined difference to map inputs representing nominally healthy assets acquired at similar times to a cluster of data points.

Training the encoder model may comprise updating values of trainable parameters of the encoder model to minimize a value of a loss function, wherein the loss function comprises at least one of: a first loss function component which is configured to cause data points relating to measured values of input parameters acquired from the same asset that are closer in time to be clustered closer in feature space, a second loss function component which is configured to penalise dissimilarity between the input and the reconstructed input, and a third loss function component which is configured to cause data points representing nominally healthy assets to cluster in feature space. The first loss function component is configured such that it allows normal behaviour changes (for example, those that evolve in time over the lifetime of the asset) to be reflected in the feature space.

The first loss function component may be of the form:

$$L_1 = \frac{1}{n}\sum_{i=1}^{n}\sum_{k=1}^{n}\lambda_{ik}\left|\left|z_i - z_k\right|\right|^2$$

where n is the total number of data points, $z_i$ where i = 1, ..., n is the $i^{th}$ data point in the feature space, $z_k$ where k = 1, ..., n is the $k^{th}$ data point in the feature space, and $\lambda_{ik}$ is a parameter that causes data points relating to measured values of input parameters acquired from the same asset that are closer in time to be clustered closer in feature space.

In some embodiments, $\lambda_{ik} = e^{-\gamma\Delta t2}$ if the data points $z_i$ and $z_k$ represent the same asset, and $\lambda_{ik} = 0$ otherwise. In some embodiments, $\lambda_{ik}$ may be set to 0 if the data point was obtained at a point in time that is close to a maintenance event, or some other known external action which may mean that the asset is expected to change.

In these embodiments, the $L_1$ component of the loss function constrains the feature space by encouraging data from the same asset to be mapped close together in the feature space, with a slow shift in the data distribution over time due to degradation in the asset (which is induced by the dynamic value $\lambda_{ik}$). By encouraging data from the same asset to be close together in Z, the impact of operating conditions on the behaviour of the asset are reduced in the mapping. This improves the structure of the feature space, and preventing possible anomalous behaviours from being masked by operating conditions when they are mapped to the feature space.

As noted above, the assets degrade during their lifetime, and may be modified during maintenance. Therefore, the distribution of the data generated by an asset (that is still reflective of normal asset behaviour as it degrades) changes over time. Data recorded from events early in an asset's life will show different behaviours or characteristics to events that are recorded after a period of operation of the asset. The dynamic value $\lambda_{ik}$ therefore allows these normal behaviour changes (that evolve in time over the lifetime of the asset) to be reflected in the feature space.

In these embodiments, $\gamma$ acts as a time decay penalty. In these embodiments, in training, the encoder model will be penalised if data, from the same asset and recorded closer in time, are not mapped close to each other in the feature space. The penalty decays as the time between the two recorded data points increases. The value of $\gamma$ may be predetermined, and may be determined based on the type of the asset, and how quickly it is expected to degrade.

The second loss function component may be of the form:

$$L_2 = \frac{1}{n}\sum_{i=1}^{n}\left|\left|\Delta_i - \widehat{\Delta}_i\right|\right|^2$$

where n is the total number of inputs, $\Delta_i$ where i = 1, ..., n is the $i^{th}$ input, and $\widehat{\Delta}_i$ is the $i^{th}$ reconstructed input.

The second component of the loss function $L_2$ may therefore be configured to penalise dissimilarity between the input to the encoder model, and the reconstructed input generated by the decoder model. In these embodiments, $L_2$ is the component of the loss function that encourages reconstruction of the input that is provided to the encoder model at the output of the decoder model, and hence prevents information from being lost as the encoder model maps a residual to the feature space.

The third loss function component may be of the form:

$$L_3 = \frac{1}{n}\sum_{i=1}^{n}||z_i - c||^2$$

where n is the total number of data points, $z_i$ where i = 1, ..., n is the $i^{th}$ data point in the feature space, and c is a centroid of the cluster of data points representing nominally healthy assets.

By minimizing the value of the third component of the loss function during the training process, the encoder model may be trained to minimize a volume of a hypersphere in Z that contains the transformed data points that represent nominally healthy assets. That is, the encoder model may be trained to closely cluster the transformed data points that represent nominally healthy assets. In order to minimize the value of the third loss function component, the encoder model may learn to extract the common factors of variation to map data points to the centre of this hyper sphere. This means that asset behaviour that is well represented in the dataset will fall within the hypersphere, and data from assets with similar behaviour will then be expected be projected close to each other within the feature space. Conversely, data with factors or behaviours that are not well understood (e.g., anomalies) will be mapped far from the centre of the cluster. In these embodiments, $L_3$ is therefore configured to cause data points representing nominally healthy assets to cluster in feature space.

The method 800 may further comprise using the trained encoder model in a method of monitoring the health of an asset (for example, in the methods 600 and/or 700 described above).

For the purposes of evaluation of an example implementation of the methods disclosed herein, the use case of anomalous behaviour detection in gas turbine engines is considered for a real-world aerospace GTE system that exhibits nonlinear, time varying behaviour with observed faults.

In this use case, a fleet (group) of in-service gas turbine engines was considered. Data (that is, historical values of input and output parameters) were obtained over a period of one year from eighty one different engines. Each engine had a different initial age and had a unique usage history. A single data point was recorded for each operational cycle for each engine in this group. In this example, each data point was a vector length nine with each element containing a measured sensor value from one of nine different sensors placed on the engine. A subset of the engines experienced a fault that had been labelled by a domain expert and linked to a given operational cycle taken by the respective engine. It will be appreciated that these faults were not guaranteed to be observable in the available sensor data.

In this example, these data points (separated into values of input parameters that describe operational states of each engine in the fleet, and values of output parameters that represent the behaviour of each engine in the fleet) were used to train the predictor model 402 described above. The predictor model 402 then learnt to predict the expected or typical behaviour of the group of engines for a particular operational state, based on measured values of input parameters that represent that operational state.

In this example, the input parameters comprised the following: a total air temperature, an altitude, a Mach Number, a low pressure compressor rotating speed, a commanded position of a high pressure bleed valve, a commanded position of a first intermediate pressure bleed valve, a commanded position of a second intermediate pressure bleed valve, and an ambient pressure. It will be appreciated that an open bleed valve can make a significant difference to the performance of an engine.

In this example, the output parameters comprised the following: a turbine gas temperature, a high pressure compressor rotating speed, a high pressure compressor delivery pressure, a fuel flow, a static pressure at high pressure compressor entry, a high pressure compressor delivery temperature, and a low pressure turbine exit temperature.

The trained predictor model 402 was then provided with input parameters relating to nine respective gas turbine engines in the same fleet, and respective output parameters were generated by the predictor model 402. For each of these output parameters, a set of residuals for each of the nine gas-turbine engines respectively were determined, according to the methods described herein.

For each of the nine gas turbine engines respectively, the set of residuals were provided to the encoder model 404 (which had been trained according to the methods described herein to map inputs representing nominally healthy assets to a cluster of data points in a feature space), to map these residuals to a feature space.

The clusters obtained in the feature space for the nine gas turbine engines are shown in FIG. 9. FIG. 9 shows the resulting feature space projections for these determined residuals for the nine engines. Each individual plot in FIG. 9 shows the data from a different engine. Although the data points for each engine are plotted separately, in reality they overlay each other in the feature space where they exhibit similar behaviour.

The effects of the determined residual features in the structure of the feature space is now described. The data points in the feature space is coloured, from white to dark grey, based on the operational cycle date that the data point represents. White points represent early recorded operational cycles, while dark grey represents late recorded operational cycles. It can be seen that, when the determined residual features are mapped to the feature space, a gradient (based on time) is obtained in the feature space.

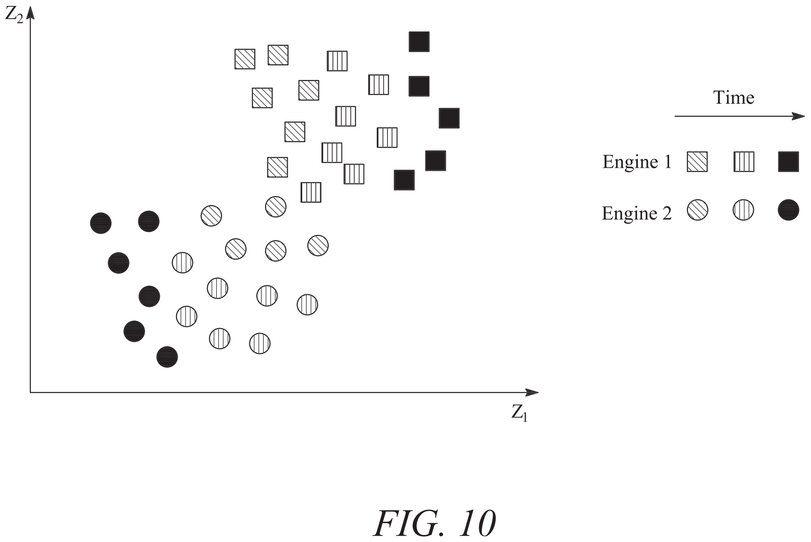

FIG. 10 shows an example of data evolution in the feature space, for two of these nine engines. Each of these two engines exhibits different behaviour, causing them to sit in a different location in the feature space. Over time, the behaviour of each engine changes (as the engine degrades), causing the data points to move within the feature space. This evolution represents typical engine behaviour as the engine ages.

With reference to FIG. 9, engine faults are then detected (for a particular engine) using the distance from a particular data point to the centre of the cluster for that particular engine, according to the methods described herein. For example, this distance may be compared to a predetermined distance threshold in order to generate an abnormal asset behaviour prediction.

The efficacy of the fault detection methods described herein may be shown by comparison to another fault detection approach (based on a residual determined using a first principles model) for this use case. For this comparison, labelled data was used to test the ability of the methods to detect anomalies. These labels indicate the engine serial number and the date of known anomalies.

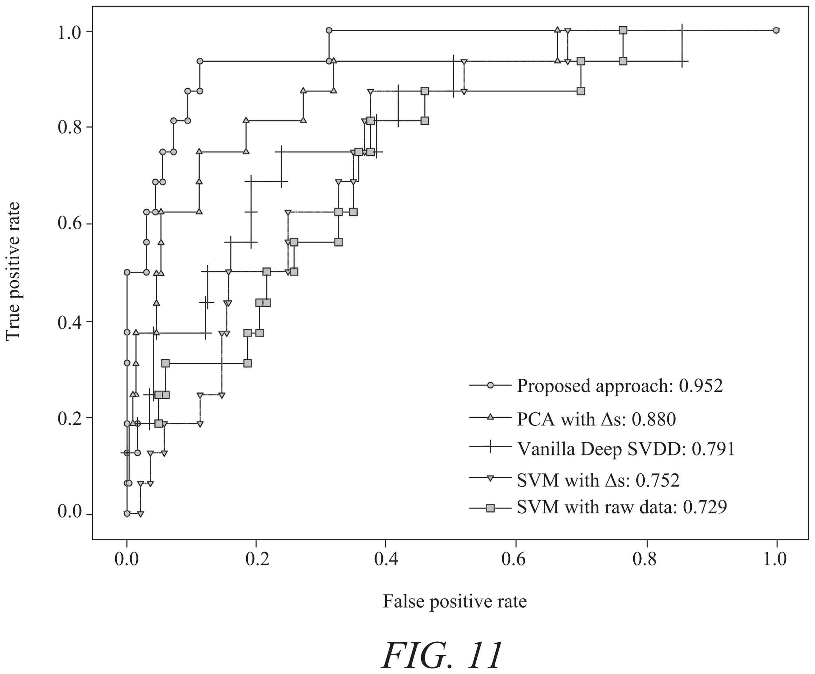

In this comparison, the receiver operating characteristic (ROC) curves shown in FIG. 11 were generated.

The ROC curve 1102 was obtained for the methods described herein, applied to the use case described above. The ROC curve 1104 was obtained for the use case described above, wherein the ∆ features were mapped to a different space by using PCA, and the score or metric (to detect anomalies) was the ratio between the variance and the distance from the mean. The ROC curve 1106 was obtained for the use case described above, where a one-class SVM trained with the ∆ features was used to perform anomaly detection. The ROC curve 1108 was obtained for the use case described above, where a DeepSVDD approach was used to perform anomaly detection. The ROC curve 1110 was obtained for the use case described above, where a one-class SVM trained with the raw data obtained from the fleet was used to perform anomaly detection.

The efficacy of the method can be characterised by the area under each ROC curve (AUC). These results show that the methods described herein exhibit the best performance, with the larger area under the curve (AUC). These results also show the importance of removing the effects of operating conditions through the ∆ features.

Example methods according to the present disclosure can represent data that represents the behaviour and/or the health of the asset in a manner that removes operational variation, and constrain the structure of a feature space to which this data is then mapped, and in which anomaly detection is then performed. Performing anomaly detection in this manner enables anomalies that arise due to variations in the health of the asset, and not anomalies that arise due to operational variability, to be effectively detected.

It will be appreciated that the methods described herein (that remove operational variation and constrain the structure of the feature space in order to perform more effective anomaly detection) can be applied to other type of applications, such as fault detection in aerospace GTE operational cycle data, or fault detection in other causal systems (for example, other engineering systems where the causality is known).

The methods of the present disclosure may be implemented in hardware, or as software modules running on one or more processors. The methods may also be carried out according to the instructions of a computer program, and the present disclosure also provides a computer readable medium having stored thereon a program for carrying out any of the methods described herein. A computer program embodying the disclosure may be stored on a computer readable medium, or it could, for example, be in the form of a signal such as a downloadable data signal provided from an Internet website, or it could be in any other form.

It should be noted that the above-mentioned examples illustrate rather than limit the disclosure, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

**Claims**

1. A method of training an encoder model to map inputs representing nominally healthy assets to a cluster of data points, the method comprising:

    providing an input representing a behaviour of an asset at a first point in time to the encoder model undergoing training to map the input to a data point in the feature space, wherein the encoder model is intended to cause data points relating to measured values of input parameters acquired from the same asset at similar time to cluster in feature space;
    providing the data point to a decoder model, to determine a reconstructed input;
    determining a difference between the input, and the reconstructed input; and
    training the encoder model based on the determined difference to map inputs representing nominally healthy assets acquired at similar times to a cluster of data points.

2. The method of claim 1, wherein the input comprises a residual representing a behaviour deviation from a nominally healthy asset.

3. The method of claim 1 or 2, wherein training the encoder model comprises updating values of trainable parameters of the encoder model to minimize a value of a loss function, wherein the loss function comprises at least one of:

    a first loss function component which is configured to cause data points relating to measured values of input parameters acquired from the same asset at similar times to cluster in feature space;
    a second loss function component which is configured to penalise dissimilarity between the input and the reconstructed input; and
    a third loss function component which is configured to cause data points representing nominally healthy assets to cluster in feature space.

4. The method of claim 3, wherein the first loss function component is weighted so as to cause data points relating to measured values of input parameters acquired from the same asset that are closer in time to be clustered closer in feature space.

5. The method of claim 3 or 4, wherein the second loss function component is of the form:

$$L_2 = \frac{1}{n} \sum_{i=1}^{n} \left|\left|\Delta_i - \widehat{\Delta}_i\right|\right|^2$$

wherein n is the total number of inputs, $\Delta_i$ where i = 1, ..., n is the $i^{th}$ input, and $\hat{\Delta}_i$ is the $i^{th}$ reconstructed input.

6. The method of any of claims 3 to 5, wherein the third loss function component is of the form:

$$L_3 = \frac{1}{n} \sum_{i=1}^{n} \left|\left|z_i - c\right|\right|^2$$

wherein n is the total number of data points, $z_i$ where i = 1, ..., n is the $i^{th}$ data point in the feature space, a c is a centroid of the cluster of data points representing nominally healthy assets.

7. The method of any of claims 3 to 6, wherein the first loss function component is of the form:

$$L_1 = \frac{1}{n} \sum_{i=1}^{n} \sum_{k=1}^{n} \lambda_{ik} \left|\left|z_i - z_k\right|\right|^2$$

wherein n is the total number of data points, $z_i$ where i = 1, ..., n is the $i^{th}$ data point in the feature space, $z_k$ where k = 1, ..., n is the $k^{th}$ data point in the feature space, and $\lambda_{ik}$ is a parameter that causes data points relating to measured values of input parameters acquired from the same asset that are closer in time to be clustered closer in feature space.

8. The method of claim 7, where:

    $\lambda_{ik} = e^{-\gamma \Delta t^2}$ if the data points $z_i$ and $z_k$ represent the same asset; and

$\lambda_{ik}$ = 0 otherwise

9. A training device for training an encoder model to map residuals inputs representing nominally healthy assets to a cluster of data points, the training device comprising processing circuitry configured to:

provide an input representing a behaviour of an asset at a first point in time to the encoder model undergoing training to map the input to a data point in the feature space, wherein the encoder model is intended to cause data points relating to measured values of input parameters acquired from the same asset at similar time to cluster in feature space;
provide the data point to a decoder model, to determine a reconstructed input;
determine a difference between the input, and the reconstructed input; and
train the encoder model based on the determined difference to map inputs representing nominally healthy assets acquired at similar times to a cluster of data points.

10. The training device of claim 9, wherein the input comprises a residual representing a behaviour deviation from a nominally healthy asset.

11. The training device of claim 9 or 10, wherein the processing circuitry is configured to train the encoder model by updating values of trainable parameters of the encoder model to minimize a value of a loss function, wherein the loss function comprises at least one of:

a first loss function component which is configured to cause data points relating to measured values of input parameters acquired from the same asset at similar time to cluster in feature space;
a second loss function component which is configured to penalise dissimilarity between the input and the reconstructed input; and
a third loss function component which is configured to cause data points representing nominally healthy assets to cluster in feature space.

12. The training device of claim 11, wherein the first loss function component is weighted so as to cause data points relating to measured values of input parameters acquired from the same asset that are closer in time to be clustered closer in feature space.

13. The training device of claim 11 or 12, wherein the first loss function component is of the form:

$$L_1 = \frac{1}{n}\sum_{i=1}^{n}\sum_{k=1}^{n}\lambda_{ik}\big|\big|z_i - z_k\big|\big|^2$$

wherein n is the total number of data points, $z_i$ where i = 1, ..., n is the $i^{th}$ data point in the feature space, $z_k$ where k = 1, ..., n is the $k^{th}$ data point in the feature space, and $\lambda_{ik}$ is a parameter that causes data points relating to measured values of input parameters acquired from the same asset that are closer in time to be clustered closer in feature space.

14. The training device of claim 13, where:

$\lambda_{ik} = e^{-\gamma\Delta t^2}$ if the data points $z_i$ and $z_k$ represent the same asset; and
$\lambda_{ik}$ = 0 otherwise

15. A computer program comprising instructions which, when executed by processing circuitry of a training device, cause the training device to perform the method according to any of claims 1 to 8.

*FIG. 1*

*FIG. 2*

*FIG. 3*

$$\Delta = X_O - \widehat{X_O}$$

Predictor model

402

Encoder

404

Decoder

406

FIG. 4

EP 4 779 522 A1

*FIG. 5*

600

OBTAIN A MEASURED VALUE OF AN INPUT PARAMETER REPRESENTING AN OPERATIONAL STATE OF THE ASSET

602

DETERMINE, BASED ON THE VALUE, A RESIDUAL THAT REPRESENTS THE BEHAVIOUR OF THE ASSET

604

PROVIDE THE DETERMINED RESIDUAL TO AN ENCODER MODEL TO MAP THE DETERMINED RESIDUAL TO A DATA POINT IN A FEATURE SPACE

606

DETERMINE A DISTANCE OF THE DATA POINT RELATIVE TO A CLUSTER OF DATA POINTS IN FEATURE SPACE, WHEREIN THE CLUSTER OF DATA POINTS ARE DETERMINED BY THE ENCODER BASED ON RESIDUALS REPRESENTING NOMINALLY HEALTHY ASSETS

608

GENERATE AN ABNORMAL ASSET BEHAVIOUR PREDICTION

610

PERFORM ONE OR MORE ACTIONS ON THE ASSET

612

FIG. 6

700

| PROVIDE AN INPUT REPRESENTING THE BEHAVIOUR OF THE ASSET TO AN ENCODER MODEL TO MAP THE INPUT TO A DATA POINT IN A FEATURE SPACE, WHEREIN THE ENCODER MODEL IS CONFIGURED TO CAUSE DATA POINTS RELATING TO MEASURED VALUES OF INPUT PARAMETERS ACQUIRED FROM THE ASSET AT SIMILAR TIME TO CLUSTER IN FEATURE SPACE |
|---|

702

| DETERMINE A DISTANCE OF THE DATA POINT RELATIVE TO A CLUSTER OF DATA POINTS IN FEATURE SPACE, WHERE THE CLUSTER OF DATA POINTS ARE DETERMINED BY THE ENCODER BASED ON INPUTS REPRESENTING THE ASSET OVER A FIRST TIME PERIOD |
|---|

704

| GENERATE AN ABNORMAL ASSET BEHAVIOUR PREDICTION |
|---|

706

| PERFORM ONE OR MORE ACTIONS ON THE ASSET |
|---|

708

## FIG. 7

800

PROVIDE AN INPUT REPRESENTING A BEHAVIOUR OF AN ASSET AT A FIRST POINT IN TIME TO THE ENCODER MODEL UNDERGOING TRAINING TO MAP THE INPUT TO A DATA POINT IN THE FEATURE SPACE, WHEREIN THE ENCODER MODEL IS INTENDED TO CAUSE DATA POINTS RELATING TO MEASURED VALUES OF INPUT PARAMETERS ACQUIRED FROM THE SAME ASSET AT SIMILAR TIME TO CLUSTER IN FEATURE SPACE

802

PROVIDE THE DATA POINT TO A DECODER MODEL, TO DETERMINE A RECONSTRUCTED INPUT

804

DETERMINE A DIFFERENCE BETWEEN THE INPUT, AND THE RECONSTRUCTED INPUT

806

TRAIN THE ENCODER MODEL BASED ON THE DETERMINED DIFFERENCE TO MAP INPUTS REPRESENTING NOMINALLY HEALTHY ASSETS ACQUIRED AT SIMILAR TIMES TO A CLUSTER OF DATA POINTS

808

*FIG. 8*

Number of flights: 368

Number of flights: 515

Number of flights: 807

*FIG. 9*

Number of flights: 137

Number of flights: 440

Number of flights: 726

*FIG. 9 (cont.)*

Number of flights: 241

Number of flights: 440

Number of flights: 395

FIG. 9 (cont.)

FIG. 10

Time

Engine 1

Engine 2

$Z_2$

$Z_1$

*FIG. 11*

EP 4 779 522 A1

| | Europäisches Patentamt / European Patent Office / Office européen des brevets | **EUROPEAN SEARCH REPORT** | Application Number<br>EP 25 22 3746 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 614 026 A (BAE SYSTEMS PLC; BAE SYSTEMS PLC [GB]) 28 June 2023 (2023-06-28) * Abstract, title * * p2,p7,p12,p17,p19,p21-22 * * figure 3a * ----- | 1-15 | INV.<br>G06N3/0455<br>G06N3/088<br><br>ADD.<br>G06N3/044<br>G06N3/0464<br>G06N20/10 |
| A | Aytekin Caglar ET AL: "Clustering and Unsupervised Anomaly Detection with 1 2 Normalized Deep Auto-Encoder Representations", , 1 February 2018 (2018-02-01), pages 1-6, XP093401284, Retrieved from the Internet: URL:https://arxiv.org/pdf/1802.00187 [retrieved on 2026-05-26] * Abstract * * II.B., III.B. * ----- | 3-6,11, 12 | |
| A | POL ADRIAN ALAN ET AL: "Anomaly Detection with Conditional Variational Autoencoders", 2019 18TH IEEE INTERNATIONAL CONFERENCE ON MACHINE LEARNING AND APPLICATIONS (ICMLA) IEEE, 16 December 2019 (2019-12-16), pages 1651-1657, XP033719855, DOI: 10.1109/ICMLA.2019.00270 [retrieved on 2020-02-13] * Abstract * ----- -/-- | 3,7,8, 11,13,14 | TECHNICAL FIELDS SEARCHED (IPC)<br><br>G06N |

The present search report has been drawn up for all claims

| Place of search | Date of completion of the search | Examiner |
|---|---|---|
| The Hague | 27 May 2026 | Veynachter, Alexis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 22 3746

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous Naveen Sai ET AL: "DEEP TEMPORAL CLUSTERING: FULLY UNSUPERVISED LEARNING OF TIME-DOMAIN FEATURES", , 4 February 2018 (2018-02-04), pages 1-11, XP093401313, Retrieved from the Internet: URL:https://arxiv.org/pdf/1802.01059 [retrieved on 2026-05-26] * Abstract * * p3 * ----- | 4 | |

TECHNICAL FIELDS
SEARCHED      (IPC)

The present search report has been drawn up for all claims

| Place of search | Date of completion of the search | Examiner |
|---|---|---|
| The Hague | 27 May 2026 | Veynachter, Alexis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 3746

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2026

| Patent document cited in search report | Publication date | Patent family member(s) | Publication date |
|---|---|---|---|
| GB 2614026 A | 28-06-2023 | NONE | |

EPO FORM P0459

For more details about this annex : see Official Journal of the European Patent Office, No. 12/82

**EP 4 779 522 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100138132 A